# EUROPEAN PATENT SPECIFICATION

(11) **EP 2 541 422 B1**
(45) Date of publication and mention of the grant of the patent: **10.10.2018**
(21) Application number: 11747448.6
(22) Date of filing: 24.02.2011
(51) Int. Cl.: G06F 12/00, G06F 17/30

(54) **STORAGE DEVICE, SERVER DEVICE, STORAGE SYSTEM, DATABASE DEVICE, PROVISION METHOD OF DATA, AND PROGRAM**
SPEICHERVORRICHTUNG, SERVERVORRICHTUNG, SPEICHERSYSTEM, DATENBANKVORRICHTUNG, VERFAHREN ZUR BEREITSTELLUNG VON DATEN UND PROGRAMM DAFÜR
DISPOSITIF DE STOCKAGE, DISPOSITIF SERVEUR, SYSTÈME DE STOCKAGE, DISPOSITIF DE BASE DE DONNÉES, PROCÉDÉ DE FOURNITURE DE DONNÉES ET PROGRAMME

(30) Priority: 25.02.2010 JP 2010040346
(43) Date of publication of application: 02.01.2013
(73) Proprietor: Rakuten, Inc., Tokyo 158-0094 (JP)
(72) Inventor: FUKUDA, Masahiro, Tokyo 140-0002 (JP); SHIROTA, Takashi, Tokyo 140-0002 (JP); SHTYKH, Roman, Tokyo 140-0002 (JP)
(74) Representative: Hoffmann Eitle
(86) International application number: PCT/JP2011/054145
(87) International publication number: WO 2011/105488

(56) References cited:
- WO-A2-01/39043
- JP-A- 2003 006 036
- JP-A- 2004 240 575
- JP-A- 2006 185 169
- JP-A- 2007 086 946
- JP-A- 2008 146 380
- JP-A- 2008 287 660
- JP-A- 2009 123 047
- US-B1- 6 330 561
- FIELDING UC IRVINE J GETTYS COMPAQ/W3C J MOGUL COMPAQ H FRYSTYK W3C/MIT L MASINTER XEROX P LEACH MICROSOFT T BERNERS-LEE W3C/MIT R: "Hypertext Transfer Protocol -- HTTP/1.1; rfc2616.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 June 1999 (1999-06-01), XP015008399, ISSN: 0000-0003

## Description

### Technical Field

The present invention relates to a storage device that functions as a database cache, a server device, a storage system, a database device, a provision method of data, and a program.

### Background Art

As a system using a database, one disclosed in Patent Literature 1 below is known. The database system disclosed in Patent Literature 1 includes a data holding unit that caches data in the database. The data holding unit allows an increase in the response speed of the database and reduction of the load on the database.

The patent document US6330561B1 discloses a method to provide cache coherency using a proxy server with a proxy cache that receives requests for data and depending on the information in the cache sends a request to a resource server, which maintains volumes of resources.

### Citation List

### Patent Literature

Patent Literature 1: Japanese Patent Application Laid-Open No. 2009-265840

### Summary of Invention

### Technical Problem

In some cases, after data is cached from a database, the data may be updated in the database. Thus, a device that has acquired the data cached from the database needs to make an inquiry as to whether the data is the latest data stored in the database. It is required to reduce the load on the database to respond to the inquiry.

An object of the present invention is to provide a storage device, a server device, a storage system, a database device, a provision method of data, and a program that can reduce the load on a database device.

### Solution to Problem

One aspect of the present invention is a storage device that caches a plurality of records stored in a plurality of database devices.

A storage device according to one embodiment includes a record acquisition unit, a storage unit, a receiving unit, a retrieval unit and a file transmitting unit. The storage device provides data stored in a database device as described below. Specifically, a record acquisition unit acquires each of a plurality of records stored in a plurality of database devices as a file containing a plurality of items contained in each record. The items contained in the file includes first information for specifying a record corresponding to the file, second information indicating a degree of newness of the record and third information for specifying a database device storing the record among the plurality of database devices. The file has a file name able to be specified based on the first information contained in the file. A storage unit stores a file acquired by the record acquisition unit. A receiving unit receives first information contained in any of the records stored in the plurality of database devices from a server device connected to the storage device. A retrieval unit retrieves from the storage unit a file specified based on the first information received by the receiving unit. A file transmitting unit transmits the file retrieved by the retrieval unit to the server device.

In one embodiment, by a program causing a computer to function as the record acquisition unit, the storage unit, the receiving unit, the retrieval unit and the file transmitting unit, the computer may operate as the storage device.

Because the storage device functions as a cache of the database device, it contributes to reduction of the load on the database. Further, because the storage device provides a file containing the second information and the third information to the server device, the server device can make an inquiry only to the database specified based on the third information using the second information, which is information indicating the degree of newness of the acquired record. The load on the database device to which the inquiry is not made can be thereby reduced. Further, the database device that has received the inquiry can determine whether the acquired data is the latest data or not.

Another aspect of the present invention is a server device connected to a storage device that caches a plurality of records stored in a plurality of database devices and to the plurality of database devices. The server device includes an acquisition request receiving unit, an acquisition request transmitting unit, a file receiving unit, a data transmitting unit, a latest record request transmitting unit, a response receiving unit, and a latest data transmitting unit. The acquisition request receiving unit of the server device receives an acquisition request for a record stored in the plurality of database devices from a terminal, the acquisition request containing first information for specifying a record. The acquisition request transmitting unit of the server device transmits the first information contained in the acquisition request received by the acquisition request receiving unit to the storage device. The file receiving unit of the server device receives a file transmitted from the storage device based on the first information transmitted by the acquisition request transmitting unit. The file contains a plurality of items contained in a record specified by the first information. The items contained in the file includes the first information for specifying the record, second information indicating a degree of newness of the record and third information for specifying a database device storing the record among the plurality of database devices. The data transmitting unit of the server device transmits the file received by the file receiving unit or items contained in the file to the terminal.

In one embodiment, the server device may further include a latest record request transmitting unit, a response receiving unit, and a latest data transmitting unit. In the server device according to this embodiment, the latest data is provided as described below. Specifically, the latest record request transmitting unit transmits a latest record acquisition request containing the first information and the second information contained in the file received by the file receiving unit to a database device specified based on the third information contained in the file in response to a given request from a terminal connected to the server device. When the database device having received the latest record acquisition request has a latest record containing the first information contained in the latest record acquisition request and being newer than the degree of newness specified by the second information contained in the latest record acquisition request, the response receiving unit receives the latest record from the database device as a file containing items contained in the latest record. When the latest record does not exist, the response receiving unit receives information indicating non-existence of the latest record. The latest data transmitting unit transmits the file received by the response receiving unit or items contained in the file to the terminal having made the given request.

In one embodiment, by a program causing a computer to function as the acquisition request receiving unit, the acquisition request transmitting unit, the file receiving unit, the data transmitting unit, the latest record request transmitting unit, the response receiving unit, and the latest data transmitting unit, the computer may operate as the server device. Further, in yet another embodiment, the program may further cause the computer to function as the latest record request transmitting unit, the response receiving unit, and the latest data transmitting unit.

The server device receives a record of the database device as a file containing the first information, the second information and the third information from the storage device. Thus, the server device can make an inquiry about the latest record only to the database device specified based on the third information using the first information and the second information.

Another aspect of the present invention is a storage system that includes the above-described storage device and the above-described server device. This storage system allows reduction of the load on the database device.

A storage device according to another embodiment of the invention includes a record acquisition unit, a storage unit, an acquisition request receiving unit, a retrieval unit and a data transmitting unit. The storage device provides data as described below. Specifically, the record acquisition unit acquires each of a plurality of records stored in a plurality of database devices as a file containing a plurality of items contained in each record. The items contained in the file includes first information for specifying a record corresponding to the file, second information indicating a degree of newness of the record and third information for specifying a database device storing the record among the plurality of database devices. The file has a file name able to be specified based on the first information. The storage unit stores a file acquired by the record acquisition unit. The acquisition request receiving unit receives an acquisition request for a record stored in the plurality of database devices from a terminal, the acquisition request containing first information for specifying a record. The retrieval unit retrieves from the storage unit a file specified based on the first information contained in the acquisition request received by the acquisition request receiving unit. The data transmitting unit transmits the file retrieved by the retrieval unit or a plurality of items contained in the file to the terminal.

Because the storage device functions as a cache of the database device, it contributes to reduction of the load on the database. Further, the storage device can make an inquiry only to the database specified based on the third information using the second information, which is information indicating the degree of newness of the acquired record. The load on the database device to which the inquiry is not made can be thereby reduced. Further, the database device that has received the inquiry can determine whether the acquired data is the latest data or not.

In one embodiment, the storage device may further include a latest record request transmitting unit, a response receiving unit and a latest data transmitting unit. The storage device in this embodiment may operate as described below. Specifically, the latest record request transmitting unit transmits a latest record acquisition request containing the first information and the second information contained in the file retrieved by the retrieval unit to a database device specified based on the third information contained in the file in response to a given request transmitted from the terminal. When the database device having received the latest record acquisition request has a latest record containing the first information contained in the latest record acquisition request and being newer than the degree of newness specified by the second information contained in the latest record acquisition request, the response receiving unit receives the latest record from the database device as a file containing items contained in the latest record. When the latest record does not exist, the response receiving unit receives information indicating non-existence of the latest record. The latest data transmitting unit transmits the file received by the response receiving unit or a plurality of items contained in the file to the terminal.

In one embodiment, by a program causing a computer to function as the record acquisition unit, the storage unit, the acquisition request receiving unit, the retrieval unit and the data transmitting unit, the computer may operate as the storage device. Further, the program may further cause the computer to function as the latest record request transmitting unit, the response receiving unit and the latest data transmitting unit.

Yet another aspect of the present invention is a database device. The database device is a database device that provides a record to an external device and includes a storage unit, a file creation unit and a file transmitting unit. The storage unit stores a record containing a plurality of items. The record includes first information for specifying the record and second information indicating a degree of newness of the record. The file creation unit creates a file containing a plurality of items contained in a record stored in the storage unit. The file creation unit adds the first information and the second information in the record and third information for specifying the database device to the file and gives a file name able to be specified based on the first information to the file. The file transmitting unit transmits the file created by the file creation unit to a storage device connected to the database device.

The database device provides a record as a file containing the third information for specifying the database device. Thus, an external device that has received the file can make an inquiry only to the database device specified by the third information in the file.

In one example the database device may include a latest record request receiving unit and a response unit. The latest record request receiving unit receives a latest record request containing the first information and the second information of a record stored in the storage unit from an external device. When a latest record containing the first information contained in the latest record request received by the latest record request receiving unit and being newer than the degree of newness specified by the second information is stored in the storage unit, the latest record request receiving unit creates a file containing items contained in the latest record and transmits the file to the external device. When the latest record does not exist in the storage unit, the response unit transmits information indicating non-existence of the latest record to the external device. The database device can reduce the amount of information required to respond to the external device when it does not has the latest record to be transmitted to the external device.

In one example by a program causing a computer to function as the storage unit, the file creation unit and the file transmitting unit, the computer may function as the database device. Further, the program may further cause the computer to function as the latest record request receiving unit and the response unit.

### Advantageous Effects of Invention

As described above, according to the present invention, it is possible to provide a storage device, a server device, a storage system, a database device, a provision method of data, and a program that can reduce the load on a database device.

### Brief Description of Drawings

Fig. 1 is a view showing a storage system according to one embodiment.
Fig. 2 is a view showing a database device according to one embodiment in detail.
Fig. 3 is a view showing an example of a record stored in a storage unit of a database device.
Fig. 4 is a view showing an example of a file created by a file creation unit.
Fig. 5 is a view showing an example of a record stored in a storage unit of a database device.
Fig. 6 is a view showing an example of a file created by a response unit.
Fig. 7 is a view showing a storage device according to one embodiment.
Fig. 8 is a view showing a server device according to one embodiment.
Fig. 9 is a view showing a flow of processing in a storage system according to one embodiment.
Fig. 10 is a view showing a configuration of a computer according to one embodiment.
Fig. 11 is a perspective view of a computer according to one embodiment.
Fig. 12 is a view showing a structure of a program P16 that causes a computer to operate as a database device 16.
Fig. 13 is a view showing a structure of a program P12 that causes a computer to operate as a storage device 12.
Fig. 14 is a view showing a structure of a program P14 that causes a computer to operate as a server device 14.
Fig. 15 is a view showing a storage system according to another embodiment.
Fig. 16 is a view showing a storage device according to another embodiment.
Fig. 17 is a view showing a flow of processing in a storage system according to another embodiment.
Fig. 18 is a view showing a structure of a program that causes a computer to operate as a storage device 42.

### Description of Embodiments

Various embodiments of the present invention are described hereinafter in detail with reference to the drawings. Note that, in each of the drawings, the same or equivalent elements are denoted by the same reference symbols.

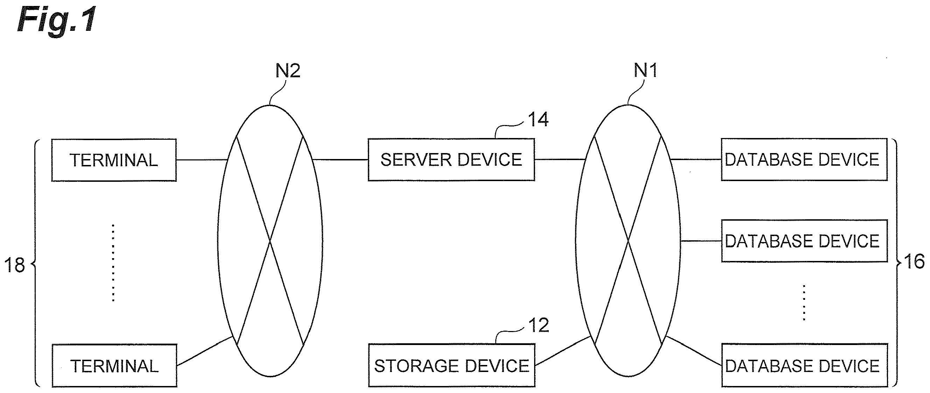

Fig. 1 is a view showing a storage system according to one embodiment. As shown in Fig. 1, a storage system 10 includes a storage device 12 and a server device 14. In one embodiment, the storage system 10 may further include a plurality of database devices 16.

The storage device 12, the server device 14 and the database devices 16 are connected with one another through a network N1. The storage device 12, the server device 14 and the database devices 16 may be connected in an arbitrary fashion. For example, the connection may be made by an arbitrary way such as the Internet, local area network, or private network.

The storage system 10 receives a request from a terminal 18 through a network N2 and, in response to the request, provides data stored in the database device 16 to the terminal 18.

The storage system 10 is described hereinafter according to an example of providing product data to the terminal 18. The storage system 10, however, may provide arbitrary data different from the product data.

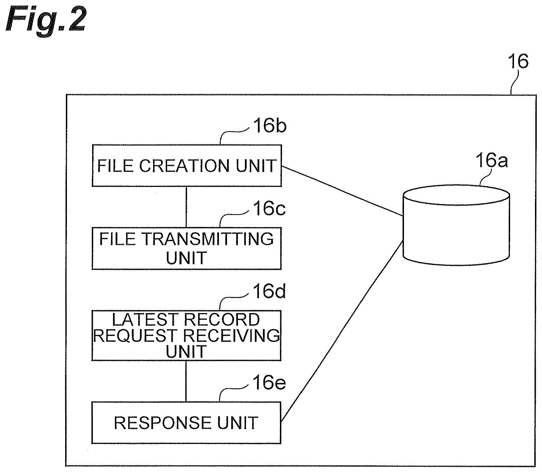

Fig. 2 is a view showing a database device according to one embodiment in detail. The database device 16 shown in Fig. 2 is a device that stores one or more records containing a plurality of information items related to one or more products.

The database device 16 includes a storage unit 16a, a file creation unit 16b, and a file transmitting unit 16c. In one embodiment, the database device 16 may further include a latest record request receiving unit 16d and a response unit 16e.

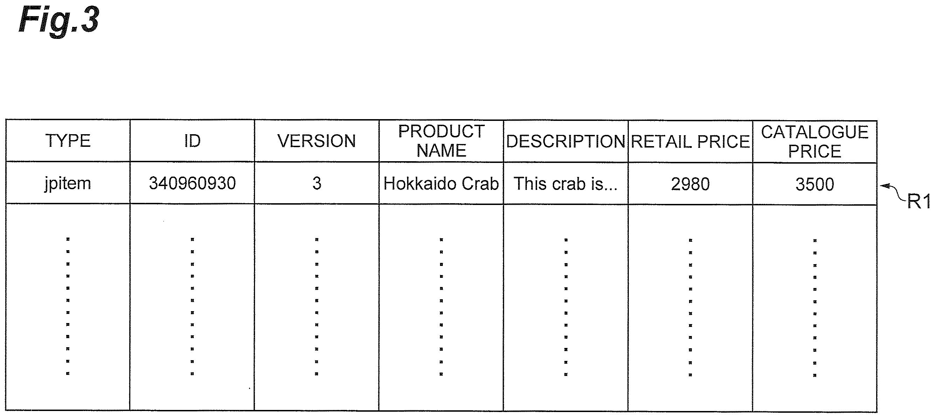

Fig. 3 is a view showing an example of a record stored in a storage unit of a database device. As shown in Fig. 3, the storage unit 16a can store a record containing a plurality of information items related to each product. The record shown in Fig. 3 contains, as the information items, type, ID (first information), version (second information), product name, description, retail price and catalogue price.

The information item "type" is an information item that specifies the type of a product, and the information item "type" in the record R1 shown in Fig. 3 contains information "jpitem". The information item "ID" is an information item that gives identification information of the record R1. In the record R1, the identification information "340960930" is contained as the ID. The information item "version" is an information item that specifies the degree of newness indicating how new the record is. In the record R1, the information "3" is contained as the version. The information item "product name" is an information item that specifies the name of a product. In the record R1, the information "Hokkaido crab" is contained as the product name. The information item "description" is an information item that describes the details of a product. In the record R1, the information "This crab is..." is contained as the description. The information item "retail price" is an information item that specifies the retail price of a product. In the record R1, the information indicating the price "2980" is contained as the retail price. The information item "catalogue price" is an information item that specifies the catalogue price of a product. In the record R1, the information indicating the price "3500" is contained as the catalogue price.

The file creation unit 16b is a part that creates a file to be provided to the storage device 12. The file creation unit 16b creates a file on the basis of a record stored in the storage unit 16a.

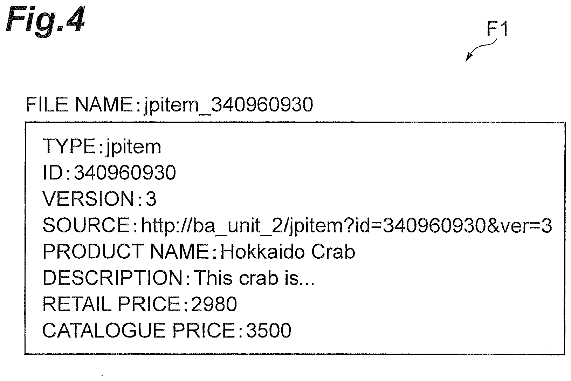

Fig. 4 is a view showing an example of a file created by a file creation unit. The file creation unit 16b creates a file that contains information items in a record stored in the storage unit 16a. The example of Fig. 4 shows a file F1 that is created by the file creation unit 16b, and the file F1 contains the information items in the record R1 stored in the storage unit 16a.

Further, the file creation unit 16b adds source information into the file. The source information contains specifying information (third information) that specifies the database device 16 which has the record corresponding to the file. In the example of Fig. 4, the specifying information "ba_unit_2" is contained in the source information.

Further, the file creation unit 16b gives a file name containing ID (first information) to the created file. In the example of Fig. 4, the file name "jpitem_340960930" that contains the ID "340960930" is given to the file F1. The file name serves as a search key in the storage device 12 as described later. The file shown in Fig. 4 is a structured document file such as XML in which information is associated with tags such as type and ID. The file, however, may be in an arbitrary format.

The file transmitting unit 16c is a part that transmits the file created by the file creation unit 16b to the storage device 12. When a new record is registered into the storage unit 16a or a modification is made to the existing record, the file creation unit 16b and the file transmitting unit 16c create a file on the basis of the new record or the modified record and transmit the file to the storage device 12.

The latest record request receiving unit 16d receives a latest record acquisition request that is transmitted through the server device 14 when a given request from a terminal is made. The latest record acquisition request is to request the latest record corresponding to the record provided to the storage device 12. Therefore, the latest record acquisition request contains ID (first information), version (second information), and specifying information.

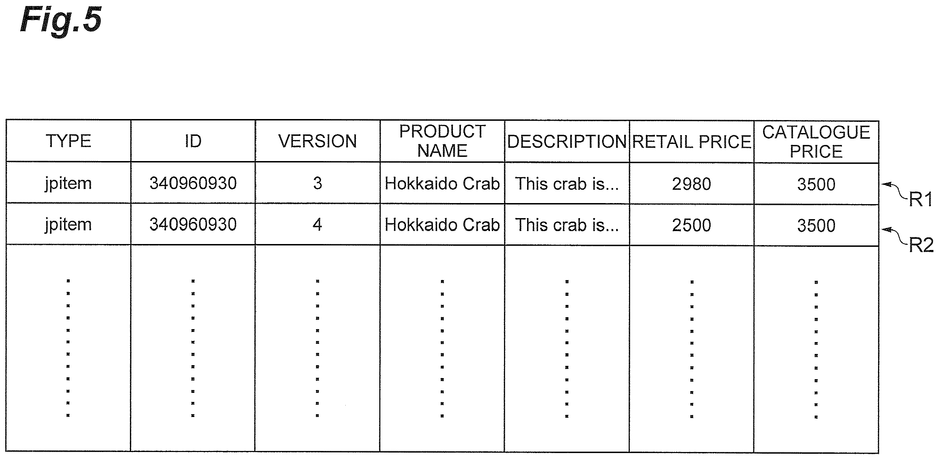

Fig. 5 is a view showing an example of a record stored in a storage unit of a database device. Assume, for example, that after the file F1 corresponding to the record R1 shown in Fig. 3 has been provided to the storage device 12, a record R2, which is the updated version of the record R1, is stored into the storage unit 16a. It is also assumed that at this point of time, the record R2 is not yet provided as a file to the storage device 12 due to the delay of provision of a file to the storage device 12. In the example of Fig. 5, the record R2 has the version "4", which is a larger value than the version "3" of the record R1. Thus, the version of the record R2 indicates that the record R2 is newer than the record R1. Further, in the record R2, the retail price is updated from that of the record R1. The record R2 may be stored by overwriting the record R1 in the storage unit 16a. Specifically, for the record with the type "jpitem" and the ID "340960930", the latest record R2 may be stored by overwriting the record R1, which is not newer than the record R2, in the storage unit 16a.

The latest record acquisition request, which is a request for the latest record corresponding to the record R1, for example, that is received by the latest record request receiving unit 16d at the above point of time may be in the form of URL "http://ba_unit_2/jpitem?id=340960930&ver=3". The latest record acquisition request in the URL form contains the specifying information "ba_unit_2", the ID "340960930", and the version "3". Thus, the latest record acquisition request is received only by the database device that is specified by the specifying information "ba_unit_2" among the plurality of database devices 16.

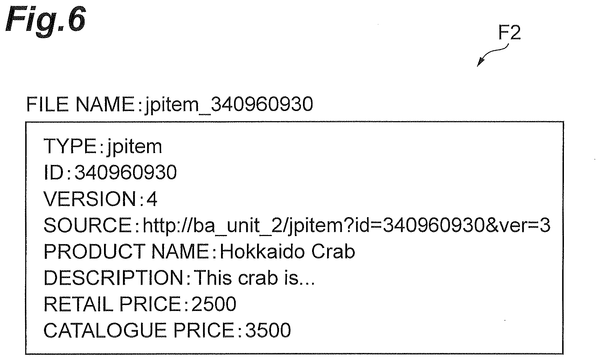

In response that the latest record request receiving unit 16d has received the latest record acquisition request, the response unit 16e determines whether the latest record that is specified by the ID contained in the latest record acquisition request and that is newer than the record specified by the version exists in the storage unit 16a. When the latest record exists, the response unit 16e creates the above-described file on the basis of the latest record. The response unit 16e then transmits the file to the server device 14. On the other hand, when the latest record does not exist, which is when the record R2 shown in Fig. 5 does not exist, the response unit 16e transmits information indicating the non-existence of the latest record to the server device 14. For example, in the case of the example of Fig. 5 described above, because the record (R2) with the newer version than the version of the record R1 exists in the storage unit 16a, the response unit 16e creates a file F2 (see Fig. 6) corresponding to the record R2 and transmits the file to the server device 14.

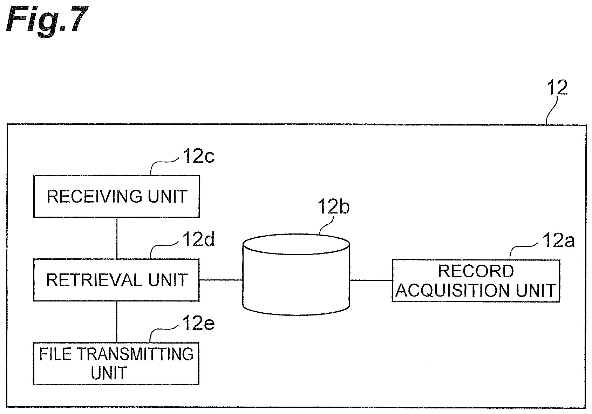

The storage device 12 is described hereinafter. Fig. 7 is a view showing a storage device according to one embodiment. The storage device 12 is a device that caches data stored in the database device 16 and provides the cached data to the server device 14.

As shown in Fig. 7, the storage device 12 includes a record acquisition unit 12a, a storage unit 12b, a receiving unit 12c, a retrieval unit 12d, and a file transmitting unit 12e.

The record acquisition unit 12a is a part that acquires a record stored in the database device 16 as a file. To be more specific, the record acquisition unit 12a acquires the above-described file (for example, see the file F1 in Fig. 4 or the file F2 in Fig. 6) transmitted by the file transmitting unit 16c of the database device 16 and stores the file into the storage unit 12b. Because a file name that is specified by the ID in the record corresponding to the file is given to the file, files created on the basis of records having the same ID have the same file name. Thus, the existing file in the storage unit 12b is overwritten by a file having the same file name that is transmitted later.

The receiving unit 12c receives an ID that is transmitted from the server device 14. In response that the receiving unit 12c has received the ID, the retrieval unit 12d retrieves a file having the file name specified by the ID from the storage unit 12b. For example, when the receiving unit 12c has received the ID "340960930", the retrieval unit 12d retrieves a file having the file name containing "340960930". In this case, when the file F1 shown in Fig. 4 is stored in the storage unit 12b, because the ID "340960930" is contained in the file name "jpitem_340960930" of the file F1, the retrieval unit 12d can retrieve the file F1. The file transmitting unit 12e transmits the file retrieved by the retrieval unit 12d to the server device 14.

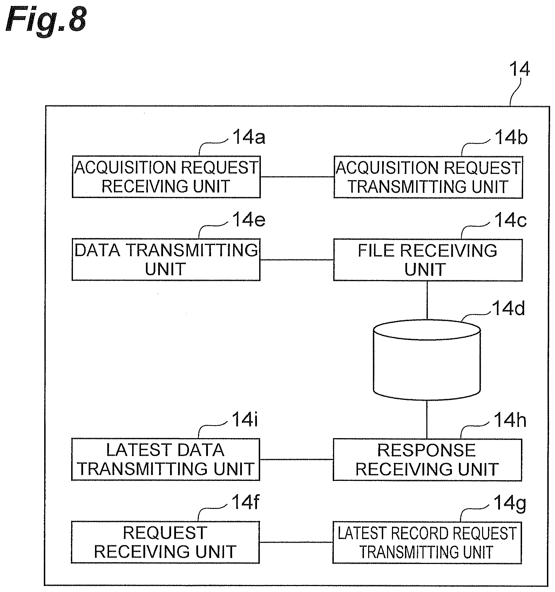

The server device 14 is described hereinafter. Fig. 8 is a view showing a server device according to one embodiment. In this example, it is assumed that the server device 14 is a web server that provides a web page for ordering a product to the terminal 18 and processes a request transmitted from the terminal 18 based on input on the web page in the terminal 18.

The server device 14 shown in Fig. 8 includes an acquisition request receiving unit 14a, an acquisition request transmitting unit 14b, a file receiving unit 14c, a storage unit 14d, and a data transmitting unit 14e. In one embodiment, the server device 14 may further include a request receiving unit 14f, a latest record request transmitting unit 14g, a response receiving unit 14h, and a latest data transmitting unit 14i.

The acquisition request receiving unit 14a receives a request for acquiring data related to a product selected by the terminal 18 on a web page that has been provided from the server device 14 to the terminal 18. In this example, the acquisition request is a request for a record that is stored in the database device 16 and that corresponds to the selected product. The acquisition request contains first information which is the ID of a product, or the ID of a record stored in the database device 16. For example, when a product corresponding to the record R1 is selected by the terminal 18, the acquisition request may be in the form of URL "http://shop1.rakutenjp/item/340960930" that contains the ID "340960930" of the record R1.

In response that the acquisition request receiving unit 14a has received the above-described acquisition request, the acquisition request transmitting unit 14b transmits the ID contained in the acquisition request to the storage device 12. The ID is "340960930" when the acquisition request in the form of URL described above is received. The ID transmitted by the acquisition request transmitting unit 14b is received by the receiving unit 12c of the storage device 12.

The file receiving unit 14c receives a file that is transmitted from the file transmitting unit 12e of the storage device 12 in response to the transmission of the ID from the acquisition request transmitting unit 14b, and stores the file into the storage unit 14d. For example, when the acquisition request transmitting unit 14b has transmitted the ID "340960930" to the storage device 12, the file F1 shown in Fig. 4 is provided from the storage device 12, and the file receiving unit 14c stores the file F1 into the storage unit 14d. The storage unit 14d may store the file received by the file receiving unit 14c into a shopping cart for the terminal 18. The shopping cart is to register various data (for example, a file) in association with information identifying a user of the terminal 18.

The data transmitting unit 14e transmits a file received by the file receiving unit 14c or data contained in the file to the terminal that has transmitted the acquisition request. For example, the data transmitting unit 14e may provide information items of a product contained in the file to the terminal 18.

The request receiving unit 14f receives a given request from the terminal 18. The given request may be a request that is transmitted from the terminal 18 when the terminal 18 purchases (checks out) a product corresponding to a file stored in the corresponding shopping cart or a request that is transmitted from the terminal 18 when the terminal 18 obtains the latest version of a record corresponding to a file stored in the corresponding shopping cart.

The latest record request transmitting unit 14g transmits the latest record acquisition request to the database device 16 in response that the request receiving unit 14f has received a given request from the terminal 18. To be more specific, the latest record request transmitting unit 14g refers to a file stored in the storage unit 14d for the terminal 18 that has transmitted the given request and generates the latest record acquisition request. For example, when the file F1 is stored for the terminal 18, the source information "http://ba_unit_2/jpitem?id=340960930&ver=3" contained in the file F1 serves as the latest record acquisition request. The source information contains the specifying information "ba_unit_2" that specifies the database device 16 having the file F1, the ID "340960930" in the file F1, and the version "3" in the file F1. The latest record request transmitting unit 14g transmits the generated latest record acquisition request to the specific database device 16. Because the specifying information is contained in the source information, only the database device 16 that is specified by the specifying information is used for processing to respond to the latest record acquisition request.

The response receiving unit 14h receives a response that is transmitted from the database device 16 in response to the latest record acquisition request transmitted by the latest record request transmitting unit 14g. When the latest record that contains the ID contained in the transmitted latest record acquisition request and that is newer than the record (the degree of newness) specified by the version exists in the database device 16, the response is a file created in the database device 16 on the basis of the latest record. On the other hand, when the latest record does not exist in the database device 16, that is, when a record that contains the ID contained in the transmitted latest record acquisition request and that is newer than the record (the degree of newness) specified by the version does not exist in the database device 16, information indicating the non-existence of the latest record, for example, information "NotModify", is transmitted as a response from the database device 16.

When a file is received, the response receiving unit 14h overwrites the old file corresponding to the received file with this file. Information items in the record, instead of a file, may be transmitted from the database device 16. In this case, the response receiving unit 14h updates the existing corresponding file using the transmitted information items.

When the response receiving unit 14h has received a file, the latest data transmitting unit 14i transmits the file or information items in the file to the terminal 18. The latest data related to a product is thereby provided to the terminal 18.

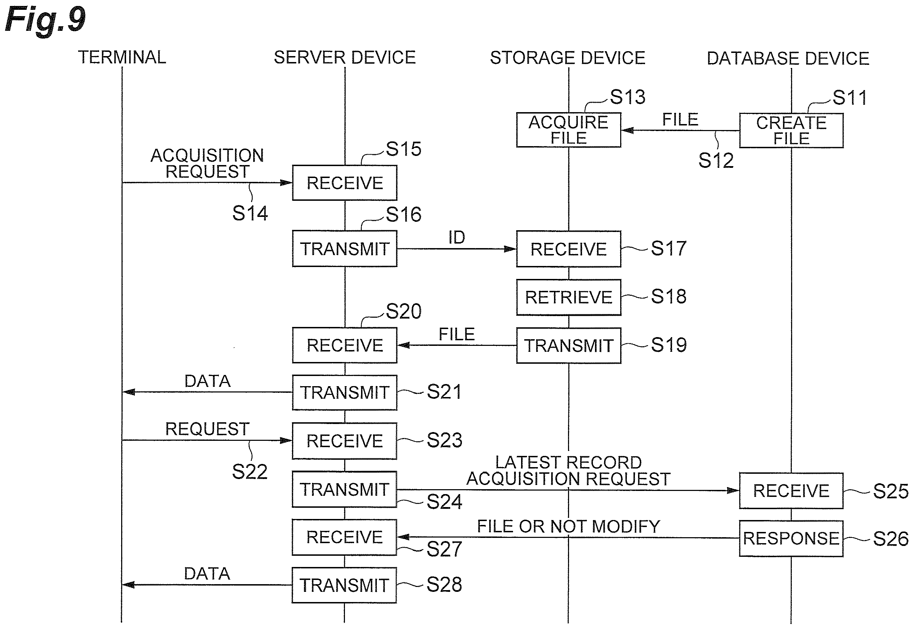

The flow of processing in the storage system 10 is described hereinafter, and a data provision method according to one embodiment is described at the same time. Fig. 9 is a view showing the flow of processing in a storage system according to one embodiment. The following description is given with reference to Fig. 9.

First, when a new record is stored into the database device 16 or the existing record is updated, the file creation unit 16b creates the above-described file (for example, see the file F1 in Fig. 4 or the file F2 in Fig. 6) on the basis of the record as shown in Step S11. After the file is created, the file transmitting unit 16c transmits the file to the storage device 12 as shown in Step S12.

Then, in Step S13, the record acquisition unit 12a of the storage device 12 receives the file transmitted by the file transmitting unit 16c and stores the file into the storage unit 12b. By the above operation, the storage device 12 caches the record stored in the database device 16.

At a certain point of time, a request for acquiring a record is transmitted from the terminal 18 as shown in Step S14. As described above, when the acquisition request is to request data of a product with the ID "340960930", the acquisition request "http://shop1.rakuten.jp/item/340960930" is transmitted from the terminal 18.

When the acquisition request is transmitted, the acquisition request receiving unit 14a of the server device 14 receives the acquisition request in Step S15. In response that the acquisition request receiving unit 14a has received the acquisition request, the acquisition request transmitting unit 14b transmits the ID contained in the acquisition request to the storage device 12 in Step S16. For example, when the acquisition request "http://shop1.rakuten.jp/item/340960930", the acquisition request transmitting unit 14b transmits the ID "340960930" to the storage device 12.

In the succeeding Step S17, the receiving unit 12c of the storage device 12 receives the ID transmitted from the acquisition request transmitting unit 14b of the server device 14. In response that the receiving unit 12c has received the ID, in Step S18, the retrieval unit 12d retrieves a file having the file name specified by the ID from the storage unit 12b. For example, when the ID is "340960930" and the file F1 is stored in the storage unit 12b, the file F1 having the file name "jpitem_340960930" is retrieved.

In the succeeding Step S19, the file transmitting unit 12e transmits the file retrieved by the retrieval unit 12d to the server device 14. When the file is transmitted from the file transmitting unit 12e of the storage device 12 to the server device 14, in Step S20, the file receiving unit 14c of the server device 14 receives the file. The file is stored into the storage unit 14d in association with information to specify the terminal 18 that has transmitted the acquisition request in Step S14, for example.

In the succeeding Step S21, the data transmitting unit 14e transmits data to the terminal 18. To be more specific, the data transmitting unit 14e transmits the file received by the file receiving unit 14c or information items in the file to the terminal 18.

After that, at a certain point of time, a given request as described above is transmitted from the terminal 18 to the server device 14 as shown in Step. 22. When the given request is transmitted, in the succeeding Step S23, the request receiving unit 14f of the server device 14 receives the given request.

In response that the request receiving unit 14f has received the given request, in the succeeding Step S24, the latest record request transmitting unit 14g transmits the latest record acquisition request to the database device 16. To be more specific, the latest record request transmitting unit 14g transmits the source information in the file stored for the terminal 18. For example, when the file F1 is stored for the terminal 18 in the storage unit 14d, "http://ba_unit_2/jpitem?id=340960930&ver=3" is transmitted as the latest record acquisition request.

In the succeeding step S25, the latest record request receiving unit 16d of the database device 16 that is specified by the specifying information in the latest record acquisition request receives the latest record acquisition request. For example, when "http://ba_unit_2/jpitem?id=340960930&ver=3" is the latest record acquisition request, the latest record request receiving unit 16d of the database device 16 that is specified by "ba_unit_2" receives the latest record acquisition request.

After the latest record request receiving unit 16d has received the latest record acquisition request, in the succeeding step S26, the response unit 16e makes a response to the server device 14. To be more specific, when the latest record that contains the ID contained in the latest record acquisition request and that has a newer version than the version contained in the latest record acquisition request exists, the response unit 16e creates a file on the basis of the latest record and transmits the file to the server device 14. For example, when the record R2 exists in the case where the acquisition request is "http://ba_unit_2/jpitem?id=340960930&ver=3", the file F2 corresponding to the record R2 is transmitted as a response to the server device 14. On the other hand, when the above-described latest record does not exist, the response unit 16e transmits information indicating the non-existence of the latest record (for example, "NotModify") as a response to the server device 14.

When a response is transmitted from the response unit 16e, in the succeeding Step S27, the response receiving unit 14h of the server device 14 receives the response. When a file is transmitted as a response, the response receiving unit 14h stores (overwrites) the file into the storage unit 14d. In response that the response receiving unit 14h has received a response, in the following Step S28, the latest data transmitting unit 14i of the server device 14 transmits the latest data to the terminal 18. Specifically, the latest file or information items in the file are transmitted to the terminal 18.

As described above, in the storage system 10, data is requested to the storage device 12, not to the database device 16, except when an important event such as checkout occurs. The load on the database device 16 is thereby reduced. Further, upon occurrence of an important event such as checkout, the latest data is acquired from the database device 16. Furthermore, as described above, at the time of acquiring the latest data, an inquiry is made only to the specific database device 16. Thus, the load on the database device to which the inquiry is not made can be reduced. It is thereby possible to acquire the latest data as well as reducing the load on the database device 16.

Particularly, in the storage system 10, files that contain a plurality of information items in the records stored in the database device 16 are held in the storage device 12. Each file contains not only information such as the ID and price of the corresponding record but also version information indicating how new the record is when the file is created and source information indicating in which database device the latest information of the record corresponding to the file is stored. Therefore, even when the storage device 12 is connected with a plurality of database devices, it is possible to know in which database device a record for which an inquiry is to be made exists based on the data (file) cached by the storage device 12 and further possible to compare the degree of newness of the information (file) of the record held by the storage device 12 and the degree of newness of the record stored in the storage device 12 using the version information. Therefore, in the storage device 12, it is possible to cache data with consistency in how new the data is as well as reducing the load on the database device 16.

Further, in the situation where the latest information is necessary such as at the time of checkout, the server device 14 can make an inquiry to the specific database 16 with information about how new the data is, and it is thus possible to make an inquiry to the correct database device without confusion. Further, because how new the data is can be known only from the version information without acquiring other various information, in the case where the server device 14 already has the latest data, it is possible to perform processing that does not carry out acquisition and transmission of data from the database device 16. This reduces the amount of data at the time of transmission.

Because the storage device 12 has cache data in the form of a file, even when the structure in the database device (the structure of a table) is changed, it is only necessary to change the contents to be written out to a file, thus having versatility. Specifically, if the storage device 12 has cache data in the form of a table, for example, when the way table is stored in the database device 16 is changed, it is necessary to change the storage device 12 in accordance with that change. On the other hand, because the storage device 12 has cache data in the form of a file, such a problem is not likely to occur.

Hereinafter, a program causing a computer to operate as the database device 16, the storage device 12 or the server device 14 is described.

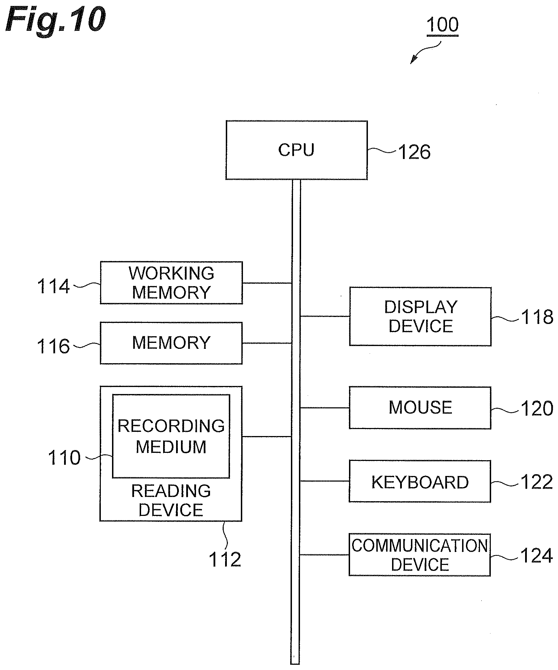

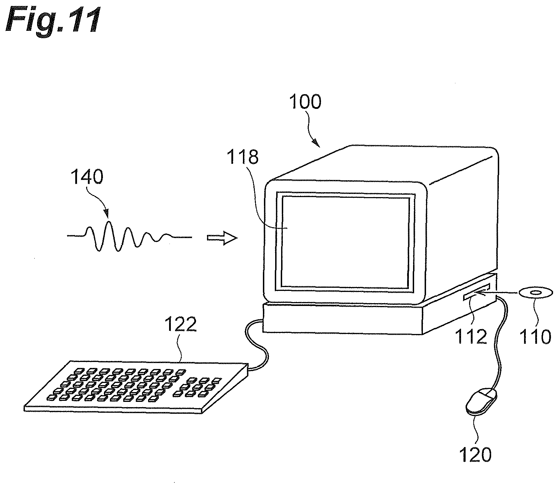

Fig. 10 is a view showing a configuration of a computer according to one embodiment. Fig. 11 is a perspective view of a computer according to one embodiment. By installing a corresponding program onto a computer 100 shown in Figs. 10 and 11, the computer 100 can operate as the database device 16, the storage device 12 or the server device 14.

The computer 100 includes a reading device 112 such as a floppy disk drive device, a CD-ROM drive device or a DVD drive device, a working memory (RAM) 114 in which an operating system is resident, a memory 116 that stores a program stored in a recording medium 110, a display device 118 such as a display, a mouse 120 and a keyboard 122 serving as input devices, a communication device 124 for transmitting and receiving data, and a CPU 126 that controls execution of the program. When the recording medium 110 is inserted into the reading device 112, the computer 100 becomes able to access the program stored in the recording medium 110 through the reading device 112, so that the computer 100 can operate according to the program. It should be note that the computer in Figs. 10 and 11 is shown by way of illustration only, and any type of computer may operate as the database device 16, the storage device 12 or the server device 14. Further, the program may be provided as a computer data signal 140 that is superimposed on a carrier wave through a network.

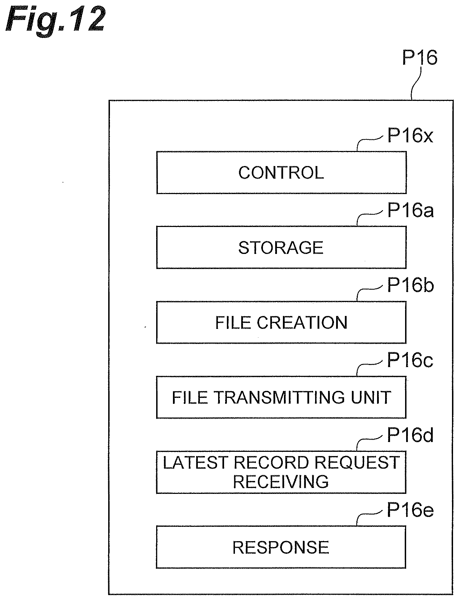

Fig. 12 is a view showing a structure of a program P16 that causes a computer to operate as the database device 16. The program P16 shown in Fig. 12 may include a control module P16x, a storage module P16a, a file creation module P16b, a file transmitting module P16c, a latest record request receiving module P16d, and a response module P16e. The control module P16x makes overall control of processing performed by the other modules in the program P16. The functions that are executed on the computer 100 caused by the storage module P16a, the file creation module P16b, the file transmitting module P16c, the latest record request receiving module P16d and the response module P16e are functions equal to the storage unit 16a, the file creation unit 16b, the file transmitting unit 16c, the latest record request receiving unit 16d and the response unit 16e described above, respectively.

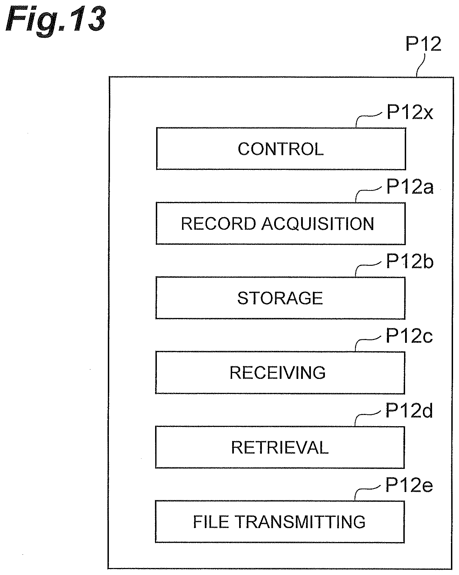

Fig. 13 is a view showing a structure of a program P12 that causes a computer to operate as a storage device 12. The program P12 shown in Fig. 13 may include a control module P12x that makes overall control of processing, a record acquisition module P12a, a storage module P12b, a receiving module P12c, a retrieval module P12d, and a file transmitting module P12e.

The functions that are executed on the computer 100 caused by the record acquisition module P12a, the storage module P12b, the receiving module P12c, the retrieval module P12d and the file transmitting module P12e are functions equal to the record acquisition unit 12a, the storage unit 12b, the receiving unit 12c, the retrieval unit 12d and the file transmitting unit 12e, respectively.

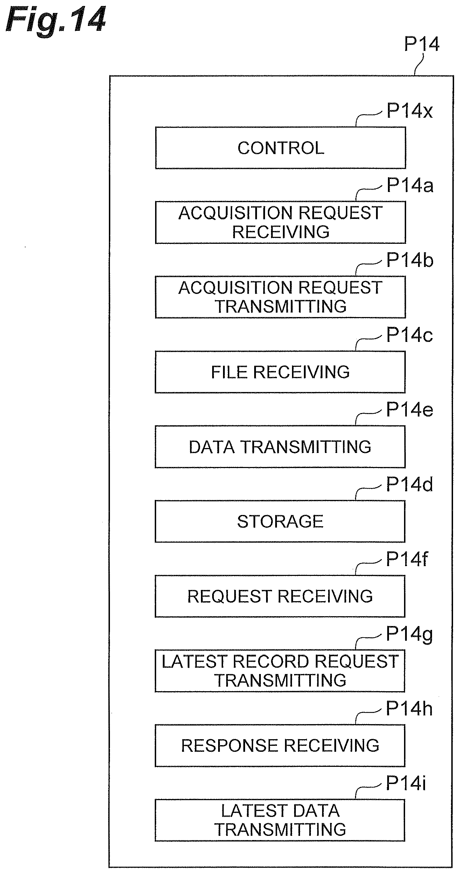

Fig. 14 is a view showing a structure of a program P14 that causes a computer to function as a server device 14. The program P14 shown in Fig. 14 may include a control module P14x that makes overall control of processing, an acquisition request receiving module P14a, an acquisition request transmitting module P14b, a file receiving module P14c, a storage module P14d, a data transmitting module P14e, a request receiving module P14f, a latest record request transmitting module P14g, a response receiving module P14h, and a latest data transmitting module P14i.

The functions that are executed on the computer 100 caused by the acquisition request receiving module P14a, the acquisition request transmitting module P14b, the file receiving module P14c, the storage module P14d, the data transmitting module P14e, the request receiving module P14f, the latest record request transmitting module P14g, the response receiving module P14h and the latest data transmitting module P14i are functions equal to the acquisition request receiving unit 14a, the acquisition request transmitting unit 14b, the file receiving unit 14c, the storage unit 14d, the data transmitting unit 14e, the request receiving unit 14f, the latest record request transmitting unit 14g, the response receiving unit 14h and the latest data transmitting unit 14i, respectively.

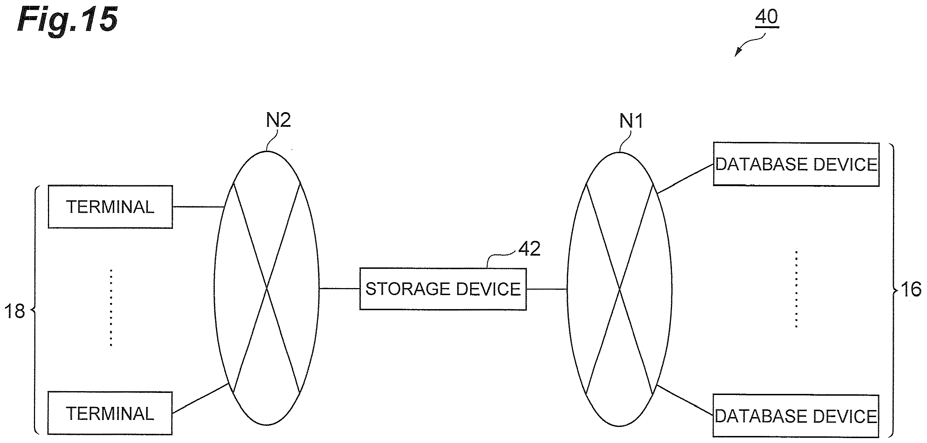

A storage system according to another embodiment is described hereinafter. Fig. 15 is a view showing a storage system according to another embodiment. A storage system 40 shown in Fig. 15 includes a storage device 42 that has the functions of both of the storage device 12 and the server device 14 described above.

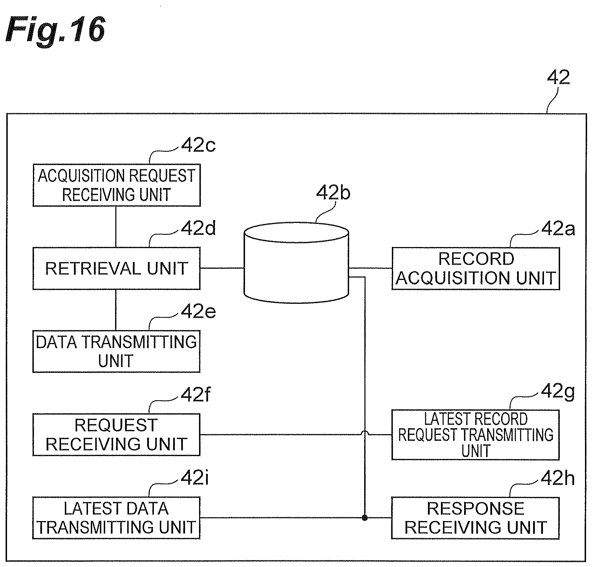

Fig. 16 is a view showing a storage device according to another embodiment. The storage device 42 shown in Fig. 16 includes a record acquisition unit 42a, a storage unit 42b, an acquisition request receiving unit 42c, a retrieval unit 42d, a data transmitting unit 42e, a request receiving unit 42f, a latest record request transmitting unit 42g, a response receiving unit 42h, and a latest data transmitting unit 42i.

The record acquisition unit 42a acquires a file from the database device 16 and stores the file into the storage unit 42b in the same manner as the record acquisition unit 12a of the storage device 12.

The acquisition request receiving unit 42c receives an acquisition request from the terminal 18 in the same manner as the acquisition request receiving unit 14a of the server device 14. The acquisition request may be in the form of URL "http://shop1.rakuten.jp/item/340960930", like the acquisition request received by the acquisition request receiving unit 14a.

The retrieval unit 42c retrieves a file specified on the basis of the ID contained in the acquisition request from the storage unit 42b. For example, when the acquisition request is "http://shop1.rakuten.jp/item/340960930 and the file F1" is stored in the storage unit 42b, the ID "340960930" is contained in the acquisition request. Thus, the retrieval unit 42c can retrieve the file F1 by specifying the file name "jpitem_340960930" based on the ID. When the acquisition request is made at the time of selecting a product, the retrieval unit 42c may store the retrieved file into a shopping cart for the terminal 18 in the storage unit 42b.

The data transmitting unit 42e receives the file retrieved by the retrieval unit 42c and transmits the file or information items in the file to the terminal 18 in the same manner as the data transmitting unit 14e of the server device 14.

The request receiving unit 42f receives a given request from the terminal 18 in the same manner as the request receiving unit 14f of the server device 14. The latest record request transmitting unit 42g transmits the latest record acquisition request to the database device 16 in response that the request receiving unit 42f has received the given request in the same manner as the latest record request transmitting unit 14g of the server device 14. For example, when the file F1 is contained as a file for the terminal 18, "http://ba_unit_2/jpitem?id=340960930&ver=3" is transmitted as the latest record acquisition request.

The response receiving unit 42h receives a response sent from the database device 16 in response to the latest record acquisition request, which is the latest file or information indicating the non-existence of the latest file (for example, "NotModify"), in the same manner as the response receiving unit 14h of the server device 14. Further, the response receiving unit 42h overwrites a file corresponding to the latest file among the existing files stored in the storage unit 42b with the latest file.

When the latest file is obtained, the latest data transmitting unit 42i transmits the latest file or information items in the latest file to the terminal 18 in the same manner as the latest data transmitting unit 14i of the server device 14.

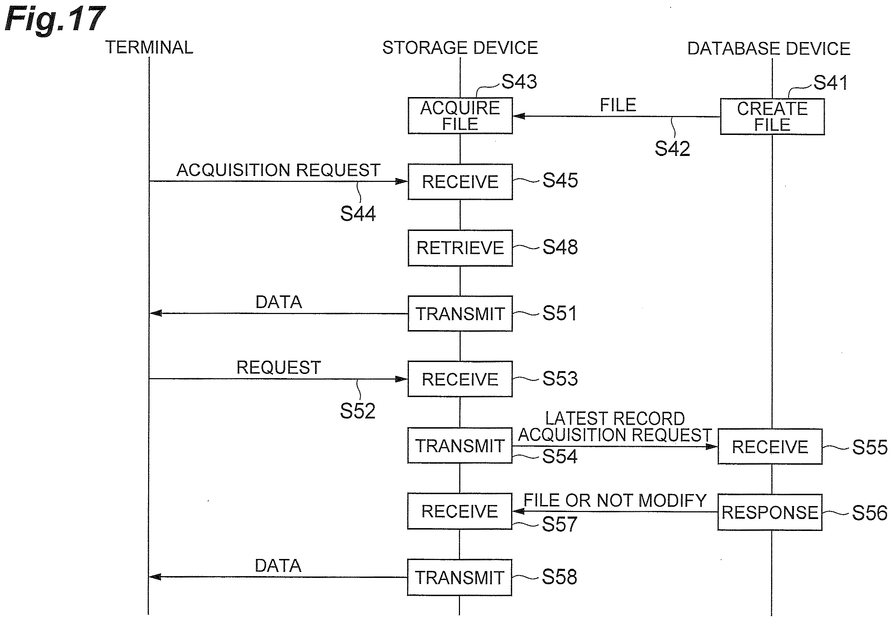

The flow of processing in the storage system 40 is described hereinafter. Fig. 17 is a view showing the flow of processing in the storage system 40. The following description is given with reference to Fig. 17.

First, in Step S41, a file is created in the database device 16 as in Step S11. In the succeeding step S42, the created file is transmitted from the database device 16 to the storage device 42 as in Step S12. In the succeeding step S43, the record acquisition unit 42a of the storage device 42 receives the file transmitted from the database device 16 and stores the file into the storage unit 42b as in Step S13.

After that, at a certain point of time, an acquisition request is transmitted from the terminal 18 as shown in Step S44 as in Step S14. The acquisition request may be in the form of URL "http://shop1.rakuten.jp/item/340960930", for example.

In the succeeding step S45, the acquisition request receiving unit 42c of the storage device 42 receives the acquisition request transmitted from the terminal 18 as in Step S15. After the acquisition request receiving unit 42c has received the acquisition request, in the succeeding step S48, the retrieval unit 42d retrieves a file having the file name specified on the basis of the ID contained in the acquisition request from the storage unit 42b as in Step S18. At this time, the retrieved file is associated with information to specify the terminal 18. Specifically, it is added to a shopping cart for the terminal 18.

After the file has been retrieved by the retrieval unit 42d, in the succeeding step S51, the data transmitting unit 42e transmits the file or information items contained in the file to the terminal 18 as in Step S21.

After that, at a certain point of time, a given request is transmitted from the terminal 18 as shown in Step S52. The request may be a request for checkout or update to the latest data as described above.

After a given request is transmitted, in the succeeding step S53, the request receiving unit 42f of the storage device 42 receives the request. After the request receiving unit 42f has received the given request, in the succeeding step S54, the latest record request transmitting unit 42g creates the latest record acquisition request and transmits the latest record acquisition request to the database device 16 as in Step S42. For example, when the file F1 is stored for the terminal 18, the latest record acquisition request is "http://ba_unit_2/jpitem?id=340960930&ver=3".

In the succeeding step S55, the latest record request receiving unit 16d of the database device 16 receives the latest record acquisition request as in Step S25. Then, in Step S56, as in Step S26, the response unit 16e of the database device 16 transmits a file on the basis of the latest record or information indicating the non-existence of the latest record to the storage device 42.

In the succeeding Step S57, the response receiving unit 42h of the storage device 42 receives a request from the response unit 16e of the database device 16 as in Step S27. When the response is a file, the existing file corresponding to the file is overwritten with the file in the storage unit 42b.

In the succeeding Step S58, when the response is a file, the latest data transmitting unit 42i of the storage device 42 transmits the file or information items in the file to the terminal 18 as in Step S28.

As described above, in the storage system 40 also, data is provided from the storage device 12, not from the database device 16, to the terminal 18 except when an important event such as checkout occurs. The load on the database device 16 is thereby reduced. Further, upon occurrence of an important event such as checkout, the latest data is acquired from the database device 16. Furthermore, as described above, at the time of acquiring the latest data, an inquiry is made only to the specific database device 16. It is thereby possible to acquire the latest data as well as reducing the load on the database device 16.

Particularly, in the storage system 40, the storage device 42 holds files that contain version information and source information in the records stored in the database device 16. Therefore, in the storage device 42, it is possible to cache data with consistency in how new the data is as well as reducing the load on the database device 16.

Further, in the situation where the latest information is necessary such as at the time of checkout, the server device 14 can make an inquiry to the specific database 16 with information about how new the data is, and it is thus possible to make an inquiry to the correct database device without confusion. Further, the amount of data at the time of transmission can be reduced.

Because the storage device 42 has cache data in the form of a file, even when the structure in the database device (the structure of a table) is changed, it is only necessary to change the contents to be written out to a file, thus having versatility.

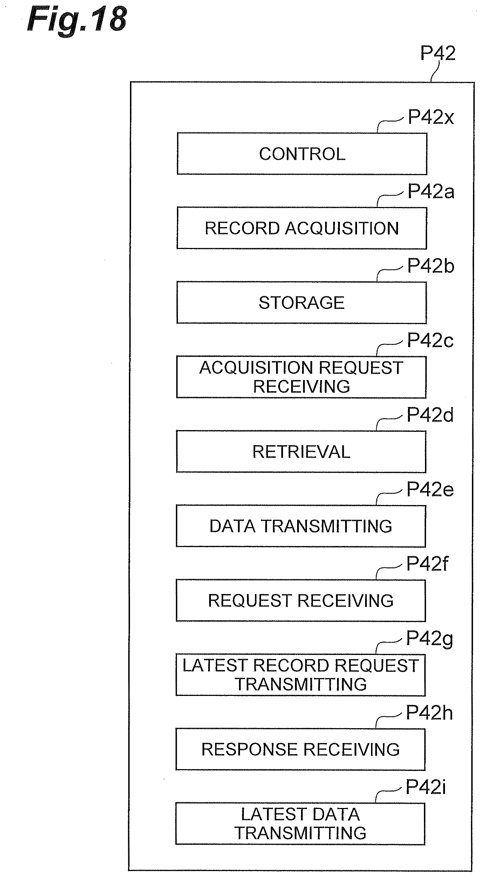

Hereinafter, a program causing a computer to operate as the storage device 42 is described. Fig. 18 is a view showing a structure of a program that causes a computer to operate as the storage device 42. A program P42 shown in Fig. 18 can be provided by being stored in a recording medium 110. Alternatively, the program P42 may be provided as a computer data signal 140 that is superimposed on a carrier wave through a network.

As shown in Fig. 18, the program P42 may include a control module P42x that makes overall control of processing, a record acquisition module P42a, a storage module P42b, an acquisition request receiving module P42c, a retrieval module P42d, a data transmitting module P42e, a request receiving module P42f, a latest record request transmitting module P42g, a response receiving module P42h, and a latest data transmitting module P42i.

The functions that are executed on the computer 100 caused by the record acquisition module P42a, the storage module P42b, the acquisition request receiving module P42c, the retrieval module P42d, the data transmitting module P42e, the request receiving module P42f, the latest record request transmitting module P42g, the response receiving module P42h and the latest data transmitting module P42i are functions equal to the record acquisition unit 42a, the storage unit 42b, the acquisition request receiving unit 42c, the retrieval unit 42d, the data transmitting unit 42e, the request receiving unit 42f, the latest record request transmitting unit 42g, the response receiving unit 42h and the latest data transmitting unit 42i, respectively.

Although various embodiments of the present invention are described in the foregoing, the present invention is not restricted to the above-described embodiments, and various changes and modifications may be made without departing from the scope of the invention. For example, although data provided is data of a product in the above-described embodiments, the idea of the present invention may be applied to data about an arbitrary target different from a product. Further, when data of a product is provided, information items such as coupon information related to a product may be contained in a record of the database device.

### Reference Signs List

10...storage system, 12...storage device, 12a...record acquisition unit, 12b...storage unit, 12c...receiving unit, 12d...retrieval unit, 12e...file transmitting unit, 14...server device, 14a...acquisition request receiving unit, 14b...acquisition request transmitting unit, 14c...file receiving unit, 14d...storage unit, 14e...data transmitting unit, 14f...request receiving unit, 14g...latest record request transmitting unit, 14h...response receiving unit, 14i...latest data transmitting unit, 16...database device, 16a...storage unit, 16b...file creation unit, 16c...file transmitting unit, 16d...latest record request receiving unit, 16e...response unit, 40...storage system, 42...storage device, 42a...record acquisition unit, 42b...storage unit, 42c...acquisition request receiving unit, 42c...retrieval unit, 42c...acquisition request receiving unit, 42d...retrieval unit, 42e...data transmitting unit, 42f...request receiving unit, 42g...latest record request transmitting unit, 42h...response receiving unit, 42i...latest data transmitting unit.

## Claims

1. A server device (14) connected to a storage device (12) that caches a plurality of records stored in a plurality of database devices (16) and to the plurality of database devices, comprising:
an acquisition request receiving unit (14a) configured to receive an acquisition request for a record stored in the plurality of database devices from a terminal (18), the acquisition request containing first information for specifying a record;
an acquisition request transmitting unit (14b) configured to transmit the first information contained in the acquisition request received by the acquisition request receiving unit to the storage device;
a file receiving unit (14c) configured to receive a file transmitted from the storage device based on the first information transmitted by the acquisition request transmitting unit, the file containing a plurality of items contained in a record specified by the first information, the items contained in the file including the first information for specifying the record, second information indicating a version of the record and third information for specifying a database device storing the record among the plurality of database devices;
a data transmitting unit (14e) configured to transmit the file received by the file receiving unit or items contained in the file to the terminal;
a latest record request transmitting unit (14g) configured to transmit a latest record acquisition request containing the first information and the second information contained in the file received by the file receiving unit to a database device specified based on the third information contained in the file in response to a given request from a terminal connected to the server device;
a response receiving unit (14h) configured to, when the database device having received the latest record acquisition request has a latest record containing the first information contained in the latest record acquisition request and being newer than the version specified by the second information contained in the latest record acquisition request, receive the latest record from the database device as a file containing items contained in the latest record and, when the latest record does not exist, receive "Not Modify"; and
a latest data transmitting unit (14i) configured to transmit the file received by the response receiving unit or items contained in the file to the terminal having made the given request.

2. A program causing a computer to function as a server device connected to a storage device that caches a plurality of records stored in a plurality of database devices and to the plurality of database devices, the server device comprising:
an acquisition request receiving unit that receives an acquisition request for a record stored in the plurality of database devices from a terminal, the acquisition request containing first information for specifying a record;
an acquisition request transmitting unit that transmits the first information contained in the acquisition request received by the acquisition request receiving unit of the server device to the storage device;
a file receiving unit that receives a file transmitted from the storage device based on the first information transmitted by the acquisition request transmitting unit, the file containing a plurality of items contained in a record specified by the first information, the items contained in the file including the first information for specifying the record, second information indicating a version of the record and third information for specifying a database device storing the record among the plurality of database devices;
a data transmitting unit that transmits the file received by the file receiving unit or items contained in the file to the terminal;
a latest record request transmitting unit that transmits a latest record acquisition request containing the first information and the second information contained in the file received by the file receiving unit to a database device specified based on the third information contained in the file in response to a given request from a terminal connected to the server device;
a response receiving unit that, when the database device having received the latest record acquisition request has a latest record containing the first information contained in the latest record acquisition request and
being newer than the version specified by the second information contained in the latest record acquisition request, receives the latest record from the database device as a file containing items contained in the latest record and, when a latest record containing the first information contained in the latest record acquisition request and being newer than the version specified by the second information contained in the latest record acquisition request does not exist,
receives "Not Modify"; and
a latest data transmitting unit that transmits the file received by the response receiving unit or items contained in the file to the terminal having made the given request.

3. A storage system (10) comprising:
a storage device (12) that caches a plurality of records stored in a plurality of database devices (16),
comprising:
a record acquisition unit (12a) configured to acquire each of a plurality of records stored in a plurality of database devices as a file containing a plurality of items contained in each record, the items contained in each file including first information for specifying a record corresponding to the file, second information indicating a version of the record and third information for specifying a database device storing the record among the plurality of database devices, and each file having a file name able to be specified based on the first information contained in the file;
a storage unit (12b) configured to store a file acquired by the record acquisition unit;
a receiving unit (12c) configured to receive first information contained in any of the records stored in the plurality of database devices from a server device (14) connected to the storage device;
a retrieval unit (12d) configured to retrieve from the storage unit a file specified based on the first information received by the receiving unit; and
a file transmitting unit (12e) configured to transmit the file retrieved by the retrieval unit to the server device; and
the server device (14) according to Claim 1.

4. A storage device (42) that caches a plurality of records stored in a plurality of database devices (16), comprising:
a record acquisition unit (42a) configured to acquire each of a plurality of records stored in a plurality of database devices as a file containing a plurality of items contained in each record, the items contained in each file including first information for specifying a record corresponding to the file, second information indicating a version of the record and third information for specifying a database device storing the record among the plurality of database devices, and each file having a file name able to be specified based on the first information;
a storage unit (42b) configured to store a file acquired by the record acquisition unit;
an acquisition request receiving unit (42c) configured to receive an acquisition request for a record stored in the plurality of database devices from a terminal, the acquisition request containing first information for specifying a record;
a retrieval unit (42d) configured to retrieve from the storage unit a file specified based on the first information contained in the acquisition request received by the acquisition request receiving unit;
a data transmitting unit (42e) configured to transmit the file retrieved by the retrieval unit or a plurality of items contained in the file to the terminal;
a latest record request transmitting unit (42g) configured to transmit a latest record acquisition request containing the first information and the second information contained in the file retrieved by the retrieval unit to a database device specified based on the third information contained in the file in response to a given request transmitted from the terminal;
a response receiving unit (42h) configured to, when the database device having received the latest record acquisition request has a latest record containing the first information contained in the latest record acquisition request and being newer than the version specified by the second information contained in the latest record acquisition request, receive the latest record from the database device as a file containing items contained in the latest record and, when a latest record containing the first information contained in the latest record acquisition request and being newer than the version specified by the second information contained in the latest record acquisition request does not exist, receive "Not Modify"; and
a latest data transmitting unit (42i) configured to transmit the file received by the response receiving unit or a plurality of items contained in the file to the terminal.

5. A method comprising:
acquiring (S43) each of a plurality of records stored in a plurality of database devices as a file containing a plurality of items contained in each record by a record acquisition unit of the storage device, the items contained in each file including first information for specifying a record corresponding to the file, second information indicating a version of the record and third information for specifying a database device storing the record among the plurality of database devices, and each file having a file name able to be specified based on the first information;
storing (S43) a file acquired by the record acquisition unit into a storage unit of the storage device;
receiving (S44) an acquisition request for a record stored in the plurality of database devices from a terminal by an acquisition request receiving unit of the storage device, the acquisition request containing first information for specifying a record;
retrieving (S48) a file specified based on the first information contained in the acquisition request received by the acquisition request receiving unit from the storage unit by a retrieval unit of the storage device;
transmitting (S51) the file retrieved by the retrieval unit or a plurality of items contained in the file from a data transmitting unit of the storage device to the terminal;
transmitting (S54) a latest record acquisition request containing the first information and the second information contained in the file retrieved by the retrieval unit to a database device specified based on the third information contained in the file in response to a given request transmitted from the terminal;
when the database device having received the latest record acquisition request has a latest record containing the first information contained in the latest record acquisition request and being newer than the version specified by the second information contained in the latest record acquisition request, receiving (S57) the latest record from the database device as a file containing items contained in the latest record and, when a latest record containing the first information contained in the latest record acquisition request and being newer than the version specified by the second information contained in the latest record acquisition request does not exist, receiving (S57) "Not Modify"; and
transmitting (S58) the file received by the response receiving unit or a plurality of items contained in the file to the terminal.

6. A program causing a computer to function as:
a record acquisition unit that acquires each of a plurality of records stored in a plurality of database devices as a file containing a plurality of items contained in each record, the items contained in each file including first information for specifying a record corresponding to the file, second information indicating a version of the record and third information for specifying a database device storing the record among the plurality of database devices, and each file having a file name able to be specified based on the first information;
a storage unit that stores a file acquired by the record acquisition unit;
an acquisition request receiving unit that receives an acquisition request for a record stored in the plurality of database devices from a terminal, the acquisition request containing first information for specifying a record;
a retrieval unit that retrieves from the storage unit a file specified based on the first information contained in the acquisition request received by the acquisition request receiving unit;
a data transmitting unit that transmits the file retrieved by the retrieval unit or a plurality of items contained in the file to the terminal;
a latest record request transmitting unit (42g) configured to transmit a latest record acquisition request containing the first information and the second information contained in the file retrieved by the retrieval unit to a database device specified based on the third information contained in the file in response to a given request transmitted from the terminal;
a response receiving unit (42h) configured to, when the database device having received the latest record acquisition request has a latest record containing the first information contained in the latest record acquisition request and being newer than the version specified by the second information contained in the latest record acquisition request, receive the latest record from the database device as a file containing items contained in the latest record and, when a latest record containing the first information contained in the latest record acquisition request and being newer than the version specified by the second information contained in the latest record acquisition request does not exist, receive "Not Modify"; and
a latest data transmitting unit (42i) configured to transmit the file received by the response receiving unit or a plurality of items contained in the file to the terminal.

7. The server device according to claim 1, wherein
the first information is identification information of a record to be specified by the first information, and
the retrieval unit retrieves from a plurality of file stored in the storage unit a file having a file name which includes the received first information.

8. The program according to claim 2, wherein
the first information is identification information of a record to be specified by the first information, and
the retrieval unit retrieves from a plurality of file stored in the storage unit a file having a file name which includes the received first information.

9. The method according to claim 5, wherein
the first information is identification information of a record to be specified by the first information, and
in said retrieving, the retrieval unit of the storage device retrieves from a plurality of file stored in the storage unit a file having a file name which includes the received first information.

## Patentansprüche

1. Servervorrichtung (14), die mit einer Speichervorrichtung (12), die eine Vielzahl von Aufzeichnungen zwischenspeichert, die in einer Vielzahl von Datenbankvorrichtungen (16) gespeichert sind, und mit der Vielzahl von Datenbankvorrichtungen verbunden ist, umfassend:
eine Erlangungsanfrageempfangseinheit (14a), die konfiguriert ist, eine Erlangungsanfrage für eine Aufzeichnung, die in der Vielzahl von Datenbankvorrichtungen gespeichert ist, von einem Endgerät (18) zu empfangen, wobei die Erlangungsanfrage erste Informationen zur Spezifizierung einer Aufzeichnung beinhaltet;
eine Erlangungsanfragesendeeinheit (14b), die konfiguriert ist, die ersten Informationen, die in der Erlangungsanfrage beinhaltet sind, die durch die Erlangungsanfrageempfangseinheit empfangen wird, zur Speichervorrichtung zu senden;
eine Dateiempfangseinheit (14c), die konfiguriert ist, eine Datei zu empfangen, die von der Speichervorrichtung basierend auf den ersten Informationen gesendet wird, die durch die Erlangungsanfragesendeeinheit gesendet werden, wobei die Datei eine Vielzahl von Punkten beinhaltet, die in einer Aufzeichnung beinhaltet sind, die durch die ersten Informationen spezifiziert ist, wobei die Punkte, die in der Datei beinhaltet sind, die ersten Informationen zum Spezifizieren der Aufzeichnung, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten;
eine Datensendeeinheit (14e), die konfiguriert ist, die Datei, die durch die Dateiempfangseinheit empfangen wird, oder Punkte, die in der Datei beinhaltet sind, zum Endgerät zu senden;
eine Letztaufzeichnungsanfragesendeeinheit (14g), die konfiguriert ist, in Antwort auf eine bestimmte Anfrage von einem Endgerät, das mit der Servervorrichtung verbunden ist, eine Letztaufzeichnungserlangungsanfrage, die die ersten Informationen und die zweiten Informationen beinhaltet, die in der Datei beinhaltet sind, die durch die Dateiempfangseinheit empfangen wird, zu einer Datenbankvorrichtung zu senden, die auf Basis der dritten Informationen spezifiziert ist, die in der Datei beinhaltet sind;
eine Antwortempfangseinheit (14h), die konfiguriert ist, wenn die Datenbankvorrichtung, die die Letztaufzeichnungserlangungsanfrage empfangen hat, eine letzte Aufzeichnung hat, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, die letzte Aufzeichnung von der Datenbankvorrichtung als eine Datei zu empfangen, die Punkte beinhaltet, die in der letzten Aufzeichnung beinhaltet sind, und, wenn die letzte Aufzeichnung nicht vorliegt, ein "Nicht Modifizieren" zu empfangen; und
eine Letztdatensendeeinheit (14i), die konfiguriert ist, die Datei, die durch die Antwortempfangseinheit empfangen wird, oder Punkte, die in der Datei beinhaltet sind, zum Endgerät zu senden, das die bestimmte Anfrage gestellt hat.

2. Programm, das einen Computer veranlasst, als eine Servervorrichtung zu dienen, die mit einer Speichervorrichtung, die eine Vielzahl von Aufzeichnungen zwischenspeichert, die in einer Vielzahl von Datenbankvorrichtungen gespeichert sind, und mit der Vielzahl von Datenbankvorrichtungen verbunden ist, die Speichervorrichtung umfassend:
eine Erlangungsanfrageempfangseinheit, die eine Erlangungsanfrage für eine Aufzeichnung, die in der Vielzahl von Datenbankvorrichtungen gespeichert ist, von einem Endgerät empfängt, wobei die Erlangungsanfrage erste Informationen zur Spezifizierung einer Aufzeichnung beinhaltet;
eine Erlangungsanfragesendeeinheit, die die ersten Informationen, die in der Erlangungsanfrage beinhaltet sind, die durch die Erlangungsanfrageempfangseinheit der Servervorrichtung empfangen wird, zur Speichervorrichtung sendet;
eine Dateiempfangseinheit, die eine Datei empfängt, die von der Speichervorrichtung basierend auf den ersten Informationen gesendet wird, die durch die Erlangungsanfragesendeeinheit gesendet werden, wobei die Datei eine Vielzahl von Punkten beinhaltet, die in einer Aufzeichnung beinhaltet sind, die durch die ersten Informationen spezifiziert ist, wobei die Punkte, die in der Datei beinhaltet sind, die ersten Informationen zum Spezifizieren der Aufzeichnung, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten;
eine Datensendeeinheit, die die Datei, die durch die Dateiempfangseinheit empfangen wird, oder Punkte, die in der Datei beinhaltet sind, zum Endgerät sendet;
eine Letztaufzeichnungsanfragesendeeinheit, die in Antwort auf eine bestimmte Anfrage von einem Endgerät, das mit der Servervorrichtung verbunden ist, eine Letztaufzeichnungserlangungsanfrage, die die ersten Informationen und die zweiten Informationen beinhaltet, die in der Datei beinhaltet sind, die durch die Dateiempfangseinheit empfangen wird, zu einer Datenbankvorrichtung sendet, die auf Basis der dritten Informationen spezifiziert ist, die in der Datei beinhaltet sind;
eine Antwortempfangseinheit, die, wenn die Datenbankvorrichtung, die die Letztaufzeichnungserlangungsanfrage empfangen hat, eine letzte Aufzeichnung hat, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, die letzte Aufzeichnung aus der Datenbankvorrichtung als eine Datei empfängt, die Punkte beinhaltet, die in der letzten Aufzeichnung beinhaltet sind, und, wenn eine letzte Aufzeichnung, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, nicht vorliegt, ein "Nicht Modifizieren" empfängt; und
eine Letztdatensendeeinheit, die die Datei, die durch die Antwortempfangseinheit empfangen wird, oder Punkte, die in der Datei beinhaltet sind, zum Endgerät sendet, das die bestimmte Anfrage gestellt hat.

3. Speichersystem (10), umfassend:
eine Speichervorrichtung (12), die eine Vielzahl von Aufzeichnungen zwischenspeichert, die in einer Vielzahl von Datenbankvorrichtungen (16) gespeichert sind, umfassend:
eine Aufzeichnungserlangungseinheit (12a), die konfiguriert ist, jede einer Vielzahl von Aufzeichnungen zu erlangen, die in einer Vielzahl von Datenbankvorrichtungen als eine Datei gespeichert sind, die eine Vielzahl von Punkten beinhaltet, die in jeder Aufzeichnung beinhaltet sind, wobei die Punkte, die in jeder Aufzeichnung beinhaltet sind, erste Informationen zum Spezifizieren einer Aufzeichnung entsprechend der Datei, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten, und jede Datei einen Dateinamen hat, der auf Basis der ersten Informationen spezifiziert werden kann, die in der Datei beinhaltet sind;
eine Speichereinheit (12b), die konfiguriert ist, eine Datei zu speichern, die durch die Aufzeichnungserlangungseinheit erlangt wird;
eine Empfangseinheit (12c), die konfiguriert ist, erste Informationen, die in einer der Aufzeichnungen beinhaltet sind, die in der Vielzahl von Datenbankvorrichtungen gespeichert sind, von einer Servervorrichtung (14), die mit der Speichervorrichtung verbunden ist, zu empfangen;
eine Abrufeinheit (12d), die konfiguriert ist, aus der Speichereinheit eine Datei abzurufen, die auf Basis der ersten Informationen spezifiziert ist, die durch die Empfangseinheit empfangen werden; und
eine Dateisendeeinheit (12e), die konfiguriert ist, die Datei, die durch die Abrufeinheit abgerufen wird, zur Servervorrichtung zu senden; und
die Servervorrichtung (14) nach Anspruch 1.

4. Speichervorrichtung (42), die eine Vielzahl von Aufzeichnungen in einer Vielzahl von Datenbankvorrichtungen (16) zwischenspeichert, umfassend:
eine Aufzeichnungserlangungseinheit (42a), die konfiguriert ist, jede einer Vielzahl von Aufzeichnungen zu erlangen, die in einer Vielzahl von Datenbankvorrichtungen als eine Datei gespeichert sind, die eine Vielzahl von Punkten beinhaltet, die in jeder Aufzeichnung beinhaltet sind, wobei die Punkte, die in jeder Aufzeichnung beinhaltet sind, erste Informationen zum Spezifizieren einer Aufzeichnung entsprechend der Datei, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten, und jede Datei einen Dateinamen hat, der auf Basis der ersten Informationen spezifiziert werden kann;
eine Speichereinheit (42b), die konfiguriert ist, eine Datei zu speichern, die durch die Aufzeichnungserlangungseinheit erlangt wird;
eine Erlangungsanfrageempfangseinheit (42c), die konfiguriert ist, eine Erlangungsanfrage für eine Aufzeichnung, die in der Vielzahl von Datenbankvorrichtungen gespeichert ist, von einem Endgerät zu empfangen, wobei die Erlangungsanfrage erste Informationen zum Spezifizieren einer Aufzeichnungen enthält;
eine Abrufeinheit (42d), die konfiguriert ist, aus der Speichereinheit eine Datei abzurufen, die auf Basis der ersten Informationen spezifiziert ist, die in der Erlangungsanfrage beinhaltet sind, die durch die Erlangungsanfrageempfangseinheit empfangen wird;
eine Datensendeeinheit (42e), die konfiguriert ist, die Datei, die durch die Abrufeinheit abgerufen wird, oder eine Vielzahl von Punkten, die in der Datei beinhaltet sind, zum Endgerät zu senden;
eine Letztaufzeichnungsanfragesendeeinheit (42g), die konfiguriert ist, in Antwort auf eine bestimmte Anfrage von dem Endgerät, eine Letztaufzeichnungserlangungsanfrage, die die ersten Informationen und die zweiten Informationen beinhaltet, die in der Datei beinhaltet sind, die durch die Abrufeinheit abgerufen wird, zu einer Datenbankvorrichtung zu senden, die auf Basis der dritten Informationen spezifiziert ist, die in der Datei beinhaltet sind;
eine Antwortempfangseinheit (42h), die konfiguriert ist, wenn die Datenbankvorrichtung, die die Letztaufzeichnungserlangungsanfrage empfangen hat, eine letzte Aufzeichnung hat, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, die letzte Aufzeichnung von der Datenbankvorrichtung als eine Datei zu empfangen, die Punkte beinhaltet, die in der letzten Aufzeichnung beinhaltet sind, und, wenn eine letzte Aufzeichnung, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, nicht vorliegt, ein "Nicht Modifizieren" zu empfangen; und
eine Letztdatensendeeinheit (42i), die konfiguriert ist, die Datei, die durch die Antwortempfangseinheit empfangen wird, oder eine Vielzahl von Punkten, die in der Datei beinhaltet sind, zum Endgerät zu senden.

5. Verfahren, umfassend:
Erlangen (S43) jeder einer Vielzahl von Aufzeichnungen, die in einer Vielzahl von Datenbankvorrichtungen als eine Datei gespeichert sind, die eine Vielzahl von Punkten beinhaltet, die in jeder Aufzeichnung beinhaltet sind, durch eine Aufzeichnungserlangungseinheit der Speichervorrichtung, wobei die Punkte, die in jeder Datei beinhaltet sind, erste Informationen zum Spezifizieren einer Aufzeichnung entsprechend der Datei, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten, und jede Datei einen Dateinamen hat, der auf Basis der ersten Informationen spezifiziert werden kann;
Speichern (S43) einer Datei, die durch die Aufzeichnungserlangungseinheit erlangt wurde in einer Speichereinheit der Speichervorrichtung;
Empfangen (S44) einer Erlangungsanfrage für eine Aufzeichnung, die in der Vielzahl von Datenbankvorrichtungen gespeichert ist, von einem Endgerät durch eine Erlangungsanfrageempfangseinheit der Speichervorrichtung, wobei die Erlangungsanfrage erste Informationen zur Spezifizierung einer Aufzeichnung beinhaltet;
Abrufen (S48) einer Datei, die auf Basis der ersten Informationen spezifiziert ist, die in der Erlangungsanfrage enthalten ist, die von der Erlangungsanfrageempfangseinheit empfangen wurde, aus der Speichereinheit durch eine Abrufeinheit der Speichervorrichtung;
Senden (S51) der Datei, die durch die Abrufeinheit abgerufen wurde, oder einer Vielzahl von Punkten, die in der Datei beinhaltet sind, von einer Datensendeeinheit der Speichervorrichtung zum Endgerät;
Senden (S54) einer Letztaufzeichnungserlangungsanfrage, die die ersten Informationen und die zweiten Informationen beinhaltet, die in der Datei beinhaltet sind, die durch die Abrufeinheit abgerufen wurde, zu einer Datenbankvorrichtung, die auf Basis der dritten Informationen spezifiziert ist, die in der Datei beinhaltet sind, in Antwort auf eine bestimmte Anfrage, die vom Endgerät gesendet wird;
wenn die Datenbankvorrichtung, die die Letztaufzeichnungserlangungsanfrage empfangen hat, eine letzte Aufzeichnung hat, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, Empfangen (S57) der letzten Aufzeichnung von der Datenbankvorrichtung als eine Datei, die Punkte beinhaltet, die in der letzten Aufzeichnung beinhaltet sind, und wenn eine letzte Aufzeichnung, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, nicht vorliegt, Empfangen (S57) ein "Nicht Modifizieren"; und
Senden (S58) der Datei, die durch die Antwortempfangseinheit empfangen wird, oder einer Vielzahl von Punkten, die in der Datei beinhaltet sind, zum Endgerät.

6. Programm, das einen Computer veranlasst, zu dienen als:
eine Aufzeichnungserlangungseinheit, die jede einer Vielzahl von Aufzeichnungen erlangt, die in einer Vielzahl von Datenbankvorrichtungen als eine Datei gespeichert sind, die eine Vielzahl von Punkten beinhaltet, die in jeder Aufzeichnung beinhaltet sind, wobei die Punkte, die in jeder Aufzeichnung beinhaltet sind, erste Informationen zum Spezifizieren einer Aufzeichnung entsprechend der Datei, zweite Informationen, die eine Version der Aufzeichnung angeben, und dritte Informationen zum Spezifizieren einer Datenbankvorrichtung aus der Vielzahl von Datenbankvorrichtungen, die die Aufzeichnung speichert, enthalten, und jede Datei einen Dateinamen hat, der auf Basis der ersten Informationen spezifiziert werden kann;
eine Speichereinheit, die eine Datei speichert, die durch die Aufzeichnungserlangungseinheit erlangt wird;
eine Erlangungsanfrageempfangseinheit, die eine Erlangungsanfrage für eine Aufzeichnung, die in der Vielzahl von Datenbankvorrichtungen gespeichert ist, von einem Endgerät empfängt, wobei die Erlangungsanfrage erste Informationen zum Spezifizieren einer Aufzeichnungen enthält;
eine Abrufeinheit, die aus der Speichereinheit eine Datei abruft, die auf Basis der ersten Informationen spezifiziert ist, die in der Erlangungsanfrage beinhaltet sind, die durch die Erlangungsanfrageempfangseinheit empfangen wird;
eine Datensendeeinheit, die die Datei, die durch die Abrufeinheit abgerufen wird, oder eine Vielzahl von Punkten, die in der Datei beinhaltet sind, zum Endgerät sendet;
eine Letztaufzeichnungsanfragesendeeinheit (42g), die konfiguriert ist, in Antwort auf eine bestimmte Anfrage von dem Endgerät, eine Letztaufzeichnungserlangungsanfrage, die die ersten Informationen und die zweiten Informationen beinhaltet, die in der Datei beinhaltet sind, die durch die Abrufeinheit abgerufen wird, zu einer Datenbankvorrichtung zu senden, die auf Basis der dritten Informationen spezifiziert ist, die in der Datei beinhaltet sind;
eine Antwortempfangseinheit (42h), die konfiguriert ist, wenn die Datenbankvorrichtung, die die Letztaufzeichnungserlangungsanfrage empfangen hat, eine letzte Aufzeichnung hat, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, die letzte Aufzeichnung von der Datenbankvorrichtung als eine Datei zu empfangen, die Punkte beinhaltet, die in der letzten Aufzeichnung beinhaltet sind, und, wenn eine letzte Aufzeichnung, die die ersten Informationen beinhaltet, die in der Letztaufzeichnungserlangungsanfrage beinhaltet sind, und neuer als die Version ist, die durch die zweiten Informationen spezifiziert ist, die in der Letztaufzeichnungserlangungsanfrage beinhaltet sind, nicht vorliegt, ein "Nicht Modifizieren" zu empfangen; und
eine Letztdatensendeeinheit (42i), die konfiguriert ist, die Datei, die durch die Antwortempfangseinheit empfangen wird, oder eine Vielzahl von Punkten, die in der Datei beinhaltet sind, zum Endgerät zu senden.

7. Servervorrichtung nach Anspruch 1, wobei
die ersten Informationen Identifizierungsinformationen einer Aufzeichnung sind, die durch die ersten Informationen zu spezifizieren ist, und
die Abrufeinheit aus einer Vielzahl von Datei, die in der Speichereinheit gespeichert ist, eine Datei mit einem Dateinamen abruft, der die empfangenen ersten Informationen enthält.

8. Programm nach Anspruch 2, wobei
die ersten Informationen Identifizierungsinformationen einer Aufzeichnung sind, die durch die ersten Informationen zu spezifizieren ist, und
die Abrufeinheit aus einer Vielzahl von Datei, die in der Speichereinheit gespeichert ist, eine Datei mit einem Dateinamen abruft, der die empfangenen ersten Informationen enthält.

9. Verfahren nach Anspruch 5, wobei
die ersten Informationen Identifizierungsinformationen einer Aufzeichnung sind, die durch die ersten Informationen zu spezifizieren ist, und
beim Abrufen die Abrufeinheit der Speichervorrichtung aus einer Vielzahl von Datei, die in der Speichereinheit gespeichert ist, eine Datei mit einem Dateinamen abruft, der die empfangenen ersten Informationen enthält.

## Revendications

1. Dispositif serveur (14) connecté à un dispositif de stockage (12) qui met en cache une pluralité d'enregistrements stockés dans une pluralité de dispositifs de base de données (16) et à la pluralité de dispositifs de base de données, comprenant :
une unité réceptrice de demande d'acquisition (14a) configurée pour recevoir une demande d'acquisition pour un enregistrement stocké dans la pluralité de dispositifs de base de données depuis un terminal (18), la demande d'acquisition contenant des premières informations pour spécifier un enregistrement ;
une unité de transmission de demande d'acquisition (14b) configurée pour transmettre les premières informations contenues dans la demande d'acquisition reçue par l'unité réceptrice de demande d'acquisition au dispositif de stockage ;
une unité réceptrice de fichier (14c) configurée pour recevoir un fichier transmis par le dispositif de stockage sur la base des premières informations transmises par l'unité de transmission de demande d'acquisition, le fichier contenant une pluralité d'articles contenus dans un enregistrement spécifié par les premières informations, les articles contenus dans le fichier incluant les premières informations pour spécifier l'enregistrement, des deuxièmes informations indiquant une version de l'enregistrement et des troisièmes informations pour spécifier un dispositif de base de données stockant l'enregistrement parmi la pluralité de dispositifs de base de données ;
une unité de transmission de données (14e) configurée pour transmettre le fichier reçu par l'unité réceptrice de fichier ou les articles contenus dans le fichier au terminal ;
une toute dernière unité de transmission de demande d'enregistrement (14g) configurée pour transmettre la toute dernière demande d'acquisition d'enregistrement contenant les premières informations et les deuxièmes informations contenues dans le fichier reçu par l'unité réceptrice de fichier à un dispositif de base de données spécifié sur la base des troisièmes informations contenues dans le fichier en réponse à une demande donnée provenant d'un terminal connecté au dispositif serveur ;
une unité réceptrice de réponse (14h) configurée pour, lorsque le dispositif de base de données a reçu la toute dernière demande d'acquisition d'enregistrement, a un tout dernier enregistrement contenant des premières informations contenues dans la toute dernière demande d'acquisition d'enregistrement et qui est plus récent que la version spécifiée par les deuxièmes informations contenues dans la toute dernière demande d'acquisition d'enregistrement, recevoir le tout dernier enregistrement du dispositif de base de données sous la forme d'un fichier contenant des articles contenus dans le tout dernier enregistrement et, lorsque le tout dernier enregistrement n'existe pas, recevoir « Ne pas modifier » ; et
une toute dernière unité de transmission de données (14i) configurée pour transmettre le fichier reçu par l'unité réceptrice de réponse ou des articles contenus dans le fichier au terminal ayant effectué la demande donnée.

2. Programme amenant un ordinateur à fonctionner comme un dispositif serveur connecté à un dispositif de stockage qui met en cache une pluralité d'enregistrements stockés dans une pluralité de dispositifs de base de données et à la pluralité de dispositifs de base de données, le dispositif serveur comprenant :
une unité réceptrice de demande d'acquisition qui reçoit une demande d'acquisition pour un enregistrement stocké dans la pluralité de dispositifs de base de données venant d'un terminal, la demande d'acquisition contenant des premières informations pour spécifier un enregistrement ;
une unité de transmission de demande d'acquisition qui transmet les premières informations contenues dans la demande d'acquisition reçue par l'unité réceptrice de demande d'acquisition du dispositif de serveur au dispositif de stockage ;
une unité réceptrice de fichier qui reçoit un fichier transmis du dispositif de stockage sur la base des premières informations transmises par l'unité de transmission de demande d'acquisition, le fichier contenant une pluralité d'articles contenus dans un enregistrement spécifié par les premières informations, les articles contenus dans le fichier incluant des premières informations pour spécifier l'enregistrement, des deuxièmes informations indiquant une version de l'enregistrement et des troisièmes informations pour spécifier un dispositif de base de données stockant un enregistrement parmi la pluralité de dispositifs de base de données ;
une unité de transmission de données qui transmet le fichier reçu par l'unité réceptrice de fichier ou des articles contenus dans le fichier au terminal ;
une toute dernière unité de transmission de demande d'enregistrement qui transmet une toute dernière demande d'acquisition d'enregistrement contenant les premières informations et les deuxièmes informations contenues dans le fichier reçu par l'unité réceptrice de fichier à un dispositif de base de données spécifié sur la base des troisièmes informations contenues dans le fichier en réponse à une demande donnée venant d'un terminal raccordé au dispositif serveur ;
une unité réceptrice de réponse qui, lorsque le dispositif de base de données a reçu la toute dernière demande d'acquisition d'enregistrement a un tout dernier enregistrement contenant les premières informations contenues dans la toute dernière demande d'acquisition d'enregistrement et est plus récente que la version spécifiée par les deuxièmes informations contenues dans la toute dernière demande d'acquisition d'enregistrement, reçoit le tout dernier enregistrement du dispositif de base de données sous la forme d'un fichier contenant des articles contenus dans le tout dernier enregistrement et, lorsqu'un tout dernier enregistrement contenant des premières informations contenues dans la toute dernière demande d'acquisition d'enregistrement et qui est plus récent que la version spécifiée par les deuxièmes informations contenues dans la toute dernière demande d'acquisition d'enregistrement n'existe pas, reçoit « Ne pas modifier » ; et
une toute dernière unité de transmission de données qui transmet le fichier reçu par l'unité réceptrice de réponse ou des articles contenus dans le fichier au terminal ayant effectué la demande donnée.

3. Système de stockage (10) comprenant :
un dispositif de stockage (12) qui met en cache une pluralité d'enregistrements stockés dans une pluralité de dispositifs de base de données (16), comprenant :
une unité d'acquisition d'enregistrement (12a) configurée pour acquérir chacun d'une pluralité d'enregistrements stockés dans une pluralité de dispositifs de base de données sous forme d'un fichier contenant une pluralité d'articles contenus dans chaque enregistrement, les articles contenus dans chaque fichier incluant des premières informations pour spécifier un enregistrement correspondant au fichier, des deuxièmes informations indiquant une version de l'enregistrement et des troisièmes informations pour spécifier un dispositif de base de données stockant l'enregistrement parmi la pluralité des dispositifs de base de données et chaque fichier ayant un nom de fichier qui est à même d'être spécifié sur la base des premières informations contenues dans le fichier ;
une unité de stockage (12b) configurée pour stocker un fichier acquis par l'unité d'acquisition d'enregistrement ;
une unité réceptrice (12c) configurée pour recevoir des premières informations contenues dans l'un quelconque des enregistrements stockés dans la pluralité de dispositifs de base de données depuis un dispositif serveur (14) connecté au dispositif de stockage ;
une unité de récupération (12d) configurée pour récupérer dans l'unité de stockage un fichier spécifié sur la base des premières informations reçues par l'unité réceptrice ; et
une unité de transmission de fichier (12e) configurée pour transmettre le fichier récupéré par l'unité de récupération au dispositif serveur ; et
le dispositif serveur (14) selon la revendication 1.

4. Dispositif de stockage (42) qui met en cache une pluralité d'enregistrements stockés dans une pluralité de dispositifs de base de données (16), comprenant :
une unité d'acquisition d'enregistrement (42a) configurée pour acquérir chacun d'une pluralité d'enregistrements stockés dans une pluralité de dispositifs de base de données sous forme de fichier contenant une pluralité d'articles contenus dans chaque enregistrement, les articles contenus dans chaque fichier incluant des premières informations pour spécifier un enregistrement correspondant au fichier, des deuxièmes informations indiquant une version de l'enregistrement et des troisièmes informations pour spécifier un dispositif de base de données stockant l'enregistrement parmi la pluralité de dispositifs de base de données et chaque fichier ayant un nom de fichier qui est à même d'être spécifié sur la base des premières informations ;
une unité de stockage (42b) configurée pour stocker un fichier acquis par l'unité d'acquisition d'enregistrement ;
une unité réceptrice de demande d'acquisition (42c) configurée pour recevoir une demande d'acquisition pour un enregistrement stocké dans la pluralité de dispositifs de base de données depuis un terminal, la demande d'acquisition contenant des premières informations pour spécifier un enregistrement ;
une unité de récupération (42d) configurée pour récupérer dans l'unité de stockage un fichier spécifié sur la base des premières informations contenues dans la demande d'acquisition reçue par l'unité réceptrice de demande d'acquisition ;
une unité de transmission de données (42e) configurée pour transmettre le fichier récupéré par l'unité de récupération ou une pluralité d'articles contenus dans le fichier au terminal ;
une toute dernière unité de transmission de demande d'enregistrement (42g) configurée pour transmettre une toute dernière demande d'acquisition d'enregistrement contenant les premières informations et les deuxièmes informations contenues dans le fichier récupéré par l'unité de récupération à un dispositif de base de données spécifié sur la base des troisièmes informations contenues dans le fichier en réponse à une demande donnée transmise depuis le terminal ;
une unité réceptrice de réponse (42h) configurée pour, lorsque le dispositif de base de données ayant reçu la toute dernière demande d'acquisition d'enregistrement a un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement, recevoir le tout dernier enregistrement du dispositif de base de données sous la forme d'un fichier contenant des articles contenus dans le tout dernier enregistrement et, lorsqu'un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement n'existe pas, recevoir « Ne pas modifier » ; et
une toute dernière unité de transmission de données (42i) configurée pour transmettre le fichier reçu par l'unité réceptrice de réponse ou une pluralité d'articles contenus dans le fichier au terminal.

5. Procédé comprenant :
l'acquisition (S43) de chacun d'une pluralité d'enregistrements stockés dans une pluralité de dispositifs de base de données sous la forme d'un fichier contenant une pluralité d'articles contenus dans chaque enregistrement par une unité d'acquisition d'enregistrement du dispositif de stockage, les articles contenus dans chaque fichier incluant des premières informations pour spécifier un enregistrement correspondant au fichier, des deuxièmes informations indiquant une version de l'enregistrement et des troisièmes informations pour spécifier un dispositif de base de données stockant l'enregistrement parmi la pluralité de dispositifs de base de données, et chaque fichier ayant un nom de fichier qui est à même d'être spécifié sur la base des premières informations ;
le stockage (S43) d'un fichier acquis par l'unité d'acquisition d'enregistrement dans une unité de stockage du dispositif de stockage ;
la réception (S44) d'une demande d'acquisition pour un enregistrement stocké dans la pluralité de dispositifs de base de données d'un terminal par une unité réceptrice de demande d'acquisition du dispositif de stockage, la demande d'acquisition contenant des premières informations pour spécifier un enregistrement ;
la récupération (S48) d'un fichier spécifié sur la base des premières informations contenues dans la demande d'acquisition reçue par l'unité réceptrice de demande d'acquisition depuis l'unité de stockage par une unité de récupération du dispositif de stockage ;
la transmission (S51) du fichier récupéré par l'unité de récupération ou d'une pluralité d'articles contenus dans le fichier d'une unité de transmission de données du dispositif de stockage au terminal ;
la transmission (S54) d'une toute dernière demande d'acquisition d'enregistrement contenant les premières informations et les deuxièmes informations contenues dans le fichier récupéré par l'unité de récupération à un dispositif de base de données spécifié sur la base des troisièmes informations contenues dans le fichier en réponse à une demande donnée transmise par le terminal ;
lorsque le dispositif de base de données a reçu la toute dernière demande d'acquisition d'enregistrement a un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement, la réception (S57) du tout dernier enregistrement depuis le dispositif de base de données sous la forme d'un fichier contenant des articles contenus dans le tout dernier enregistrement et, lorsqu'un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement n'existe pas, la réception (S57) de « Ne pas modifier » ; et
la transmission (S58) du fichier reçu par l'unité réceptrice de réponse ou d'une pluralité d'articles contenus dans le fichier au terminal.

6. Programme amenant un ordinateur à fonctionner comme :
une unité d'acquisition d'enregistrement qui acquiert chacun d'une pluralité d'enregistrements stockés dans une pluralité de dispositifs de base de données sous la forme d'un fichier contenant une pluralité d'articles contenus dans chaque enregistrement, les articles contenus dans chaque fichier incluant des premières informations pour spécifier un enregistrement correspondant au fichier, des deuxièmes informations indiquant une version de l'enregistrement et des troisièmes informations pour spécifier un dispositif de base de données stockant l'enregistrement parmi la pluralité de dispositifs de base de données, et chaque fichier ayant un nom de fichier qui est à même d'être spécifié sur la base des premières informations ;
une unité de stockage qui stocke un fichier acquis par l'unité d'acquisition d'enregistrement ;
une unité réceptrice de demande d'acquisition qui reçoit une demande d'acquisition d'un enregistrement stocké dans la pluralité de dispositifs de base de données d'un terminal, la demande d'acquisition contenant des premières informations pour spécifier un enregistrement ;
une unité de récupération qui récupère de l'unité de l'unité de stockage un fichier spécifié sur la base des premières informations contenues dans la demande d'acquisition reçue par l'unité réceptrice de demande d'acquisition ;
une unité de transmission de données qui transmet le fichier récupéré par l'unité de récupération ou une pluralité d'articles contenus dans le fichier au terminal ;
une toute dernière unité de transmission de demande d'enregistrement (42g) configurée pour transmettre une toute dernière demande d'acquisition d'enregistrement contenant les premières informations et les deuxièmes informations contenues dans le fichier récupéré par l'unité de récupération à un dispositif de base de données spécifié sur la base des troisièmes informations contenues dans le fichier en réponse à une demande donnée transmise par le terminal ;
une unité réceptrice de réponse (42h) configurée pour, lorsque le dispositif de base de données ayant reçu la toute dernière demande d'acquisition d'enregistrement a un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement, recevoir le tout dernier enregistrement du dispositif de base de données sous la forme d'un fichier contenant des articles contenus dans le tout dernier enregistrement et, lorsqu'un tout dernier enregistrement contenant les premières informations contenues dans la toute dernière demande d'acquisition d'enregistrement et qui est plus récent que la version spécifiée par les deuxièmes informations contenues dans la toute dernière demande d'acquisition d'enregistrement n'existe pas, recevoir « Ne pas modifier » ; et
une toute dernière unité de transmission de données (42i) configurée pour transmettre le fichier reçu par l'unité réceptrice de réponse ou une pluralité d'articles contenus dans le fichier au terminal.

7. Dispositif serveur selon la revendication 1, dans lequel
les premières informations sont des informations d'identification d'un enregistrement à spécifier par les premières informations et
l'unité de récupération récupère parmi une pluralité de fichier stocké dans l'unité de stockage un fichier ayant un nom de fichier qui inclut les premières informations reçues.

8. Programme selon la revendication 2, dans lequel
les premières informations sont des informations d'identification d'un enregistrement à spécifier par les premières informations et
l'unité de récupération récupère parmi une pluralité de fichier stocké dans l'unité de stockage un fichier ayant un nom de fichier qui inclut les premières informations reçues.

9. Procédé selon la revendication 5, dans lequel
les premières informations sont des informations d'identification d'un enregistrement à spécifier par les premières informations et,
dans ladite récupération, l'unité de récupération du dispositif de stockage récupère parmi une pluralité de fichier stocké dans l'unité de stockage un fichier ayant un nom de fichier qui inclut les premières informations reçues.
